(19) Europäisches Patentamt
European Patent Office
Office européen des brevets

(11) **EP 4 329 001 A1**

(12) **EUROPEAN PATENT APPLICATION**

(43) Date of publication:
**28.02.2024 Bulletin 2024/09**

(21) Application number: **23192835.9**

(22) Date of filing: **23.08.2023**

(51) International Patent Classification (IPC):
$H01M\ 4/133^{(2010.01)}$     $H01M\ 4/134^{(2010.01)}$
$H01M\ 4/1393^{(2010.01)}$    $H01M\ 4/1395^{(2010.01)}$
$H01M\ 4/36^{(2006.01)}$      $H01M\ 4/38^{(2006.01)}$
$H01M\ 4/583^{(2010.01)}$     $H01M\ 4/02^{(2006.01)}$

(52) Cooperative Patent Classification (CPC):
**H01M 4/133; H01M 4/134; H01M 4/1393;
H01M 4/1395; H01M 4/362; H01M 4/366;
H01M 4/386; H01M 4/5835;** H01M 2004/021;
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 KR 20220105644**

(71) Applicant: **Samsung SDI Co., Ltd.
Yongin-si, Gyeonggi-do 17084 (KR)**

(72) Inventors:
• **MOON, Jongseok
Yongin-si, Gyeonggi-do 17084 (KR)**
• **KIM, Youngsoo
Yongin-si, Gyeonggi-do 17084 (KR)**
• **PARK, Jinhwan
Yongin-si, Gyeonggi-do 17084 (KR)**

(74) Representative: **Michalski Hüttermann & Partner
Patentanwälte mbB
Kaistraße 16A
40221 Düsseldorf (DE)**

(54) **COMPOSITE ANODE ACTIVE MATERIAL, ANODE AND LITHIUM BATTERY COMPRISING SAME, AND METHOD OF PREPARING SAME**

(57) A composite anode active material includes: a silicon-containing composite structure; a first carbon-based coating layer on the silicon-containing composite structure and including first amorphous carbon; and second amorphous carbon within the silicon-containing composite structure, wherein the silicon-containing composite structure includes porous silicon secondary particles; and first carbon flakes on the porous silicon secondary particles, the porous silicon secondary particles each including an agglomerate of a plurality of silicon composite primary particles, wherein the silicon composite primary particles include silicon, a silicon suboxide ($SiO_x$, $0<x<2$) on the silicon, and second carbon flakes on the silicon suboxide, and wherein the second amorphous carbon is in pores of the porous silicon secondary particles, and the second amorphous carbon includes a heterogeneous element belonging to at least one of Group 15 or Group 17 of the Periodic Table.

EP 4 329 001 A1

**Description**

**BACKGROUND**

**1. Field**

One or more embodiments relate to a composite anode active material, an anode and a lithium battery employing the same, and a method of preparing the same.

**2. Description of Related Art**

In accordance with increasing miniaturization and higher performance desired and/or suitable for various devices, it has become important for lithium batteries to have higher energy density as well as miniaturization and weight reduction. That is, lithium batteries having relatively high capacity have become increasingly important.

To realize lithium batteries suitable for the above use, anode active materials having relatively high capacity are being investigated.

Compared to carbon-based anode active materials, existing silicon-based anode active materials degrade more easily from volume changes upon cycling (e.g., cycles of charging and discharging).

In this context, there is a desire or need for a lithium battery which includes a silicon-based anode active material that also provides improved cycle characteristics.

**SUMMARY**

Aspects of one or more embodiments of the present disclosure are directed toward a novel composite anode active material capable of preventing or reducing degradation of a lithium battery.

Aspects of one or more embodiments of the present disclosure are directed toward an anode including the composite anode active material.

Aspects of one or more embodiments of the present disclosure are directed toward a lithium battery employing the anode.

Additional aspects will be set forth in part in the description which follows and, in part, will be apparent from the description, or may be learned by practice of the presented embodiments of the disclosure.

According to one or more embodiments of the present disclosure, a composite anode active material includes: a silicon-containing composite structure; a first carbon-based coating layer on the silicon-containing composite structure and including a first amorphous carbon; and a second amorphous carbon within the silicon-containing composite structure, wherein the silicon-containing composite structure may include: porous silicon secondary particles; and first carbon flakes on the porous silicon secondary particle, the porous silicon secondary particles each including an agglomerate of a plurality of silicon composite primary particles, wherein the silicon composite primary particles include silicon; a silicon suboxide ($SiO_x$, $0<x<2$) on the silicon; and second carbon flakes on the silicon suboxide, wherein the second amorphous carbon is in pores of the porous silicon secondary particle, and the second amorphous carbon includes a heterogeneous element belonging to at least one of (e.g., at least one selected) from Group 15 and/or Group 17 of the Periodic Table.

According to one or more embodiments of the present disclosure, an anode includes the composite anode active material.

According to one or more embodiments of the present disclosure, a lithium battery includes: a cathode; the anode described above; and an electrolyte between the cathode and the anode.

According to one or more embodiments of the present disclosure, a method of preparing a composite anode active material includes: providing porous silicon secondary particles; preparing a silicon-containing composite structure by supplying a carbon source gas to the porous silicon secondary particles and performing heat-treatment on the porous silicon secondary particles; preparing a first composition, the first composition including the silicon-containing composite structure, an amorphous carbon precursor containing a heterogeneous element of (e.g., selected from) Group 15 and/or Group 17 of the Periodic Table, and an additive; and preparing a composite anode active material by heat-treating the first composition at a temperature of 350 °C or less, wherein the composite anode active material includes: a silicon-containing composite structure; a first carbon-based coating layer on the silicon-containing composite structure and including first amorphous carbon; and second amorphous carbon within the silicon-containing composite structure, wherein the silicon-containing composite structure includes: porous silicon secondary particles; and first carbon flakes on the porous silicon secondary particles, and the porous silicon secondary particles each including an agglomerate of a plurality of silicon composite primary particles, wherein the silicon composite primary particles include silicon; a silicon suboxide ($SiO_x$, $0<x<2$) on the silicon; and second carbon flakes on the silicon suboxide, wherein the second amorphous carbon is in pores of the porous silicon secondary particle, and the second amorphous carbon includes a heterogeneous element belonging to at least one of (e.g., at least one selected from) Group 15 and/or Group 17 of the Periodic Table.

**BRIEF DESCRIPTION OF THE DRAWINGS**

The above and other aspects, features, and/or principles of certain embodiments of the disclosure will be more apparent from the following description taken in conjunction with the accompanying drawings, in which:

FIG. 1A is a schematic diagram of a cross-section of a composite anode active material according to one or more embodiments of the present disclosure;

FIG. 1B is a schematic diagram of a cross-section of a composite anode active material according to one or more embodiments of the present disclosure;

FIG. 1C is a schematic diagram of a cross-section of a composite anode active material according to one or more embodiments of the present disclosure;

FIG. 1D is a schematic diagram of a cross-section of a composite anode active material according to one or more embodiments of the present disclosure;

FIG. 2A is a scanning electron microscope image of a composite anode active material prepared in Comparative Example 2;

FIG. 2B is a scanning electron microscope image of a composite anode active material prepared in Comparative Example 2;

FIG. 2C is a scanning electron microscope image of a composite anode active material prepared in Example 1;

FIG. 2D is a scanning electron microscope image of a composite anode active material prepared in Example 1;

FIG. 2E is a scanning electron microscope image of a composite anode active material prepared in Example 5;

FIG. 2F is a scanning electron microscope image of a composite anode active material prepared in Example 5;

FIG. 3A is a High-Angle Annular Dark-Field Scanning Transmission Electron Microscopy (HAADF-STEM) image of a cross-section of a composite anode active material prepared in Example 1;

FIG. 3B is a Transmission Electron Microscopy - Energy Dispersive X-ray Spectroscopy (TEM-EDS) mapping image of a silicon element in a cross-section of a composite anode active material prepared in Example 1;

FIG. 3C is a TEM-EDS mapping image of a carbon element in a cross-section of a composite anode active material prepared in Example 1;

FIG. 3D is a TEM-EDS mapping image of a fluorine element in a cross-section of a composite anode active material prepared in Example 1;

FIG. 3E is an image of an area selected for EDS analysis from an HAADF-STEM image in a cross-section of a composite anode active material prepared in Example 1;

FIG. 3F is an image of an area selected for EDS analysis from a TEM-EDS mapping image of a fluorine element in a cross-section of a composite anode active material prepared in Example 1;

FIG. 4A is a Nyquist plot showing results of impedance measurements of lithium batteries of Example 11 and Comparative Example 13 before cycling;

FIG. 4B is a Nyquist plot showing results of impedance measurements of lithium batteries of Example 11 and Comparative Example 13 after cycling;

FIG. 5 is a schematic diagram of a lithium battery according to one or more embodiments of the present disclosure;

FIG. 6 is a schematic diagram of a lithium battery according to one or more embodiments of the present disclosure; and

FIG. 7 is a schematic diagram of a lithium battery according to one or more embodiments of the present disclosure.

**DETAILED DESCRIPTION**

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

The illustrated embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Reference will now be made in detail to embodiments, examples of which are illustrated in the accompanying drawings, wherein, unless otherwise noted, like reference numerals refer to like elements throughout, and thus, duplicative descriptions thereof may not be provided. In this regard, the present embodiments may have different forms and should not be construed as being limited to the descriptions set forth herein. Accordingly, the embodiments are merely described below, by referring to the figures, to explain aspects of the present description.

As used herein, the term "and/or" includes any and all combinations of one or more of the associated listed items. Expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" (unless apparent otherwise to one skilled in the art) indicates only a, only b, only c, both a and b, both a and c, both b and c, all of a, b, and c, or variations thereof.

The terminology used herein is for the purpose of describing particular embodiments only and is not intended to limit the present disclosure. As used herein, the singular forms "a," "an" and "the" are intended to include the plural forms as well, unless the context clearly indicates otherwise. As used herein, the terms "comprises," "comprising," "includes," and "including" when used in this specification, specify the presence of the stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As used herein, "/" may be interpreted as "and", or as "or" depending on the context.

In the drawings, the thicknesses of layers and regions may be exaggerated for clarity of description. Like reference numerals denote like elements throughout the specification. Throughout the specification, when a component, such as a layer, a film, a region, or a plate, is described as being "above," "on," "connected to," or "coupled to" another component, the component may be directly above, on, connected to, or coupled to the other component, or one or more intervening elements or layers may be present. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In the present application, the term "particle diameter" of a particle refers to an average particle diameter if the particle is spherical, and for a particle that is non-spherical, said term refers to an average major axis length of the particle. The particle diameter of particles may be measured using a particle size analyzer (PSA). The term "particle diameter" of particles may be, for example, an average diameter of the particles. The average particle diameter refers to a median particle diameter (D50) unless explicitly stated otherwise. The median particle diameter (D50) refers to a particle size corresponding to a cumulative volume of 50 vol% counted from the smallest particle size on a particle size distribution curve on which the particles are accumulated from the smallest particle size to the largest particle size. The cumulative value may be, for example, cumulative volume. The median particle diameter (D50) may be measured by, for example, a laser diffraction method.

As used herein, particle diameter (D10) refers to a particle size corresponding to a cumulative volume of 10 vol% counted from the smallest particle size on a cumulative particle size distribution curve.

As used herein, particle diameter (D90) refers to a particle size corresponding to a cumulative volume of 90 vol% counted from the smallest particle size on the cumulative particle size distribution curve.

As used herein, "silicon suboxide" may have a substantially uniform composition represented by $SiO_x$ (0<x<2), for example. Alternatively, "silicon suboxide" may include (e.g., may be one or more selected from among) Si and/or $SiO_2$ and thus have a composition generally represented as $SiO_x$ (0<x<2). In addition, "silicon suboxide" may also include, for example, silicon-suboxide-like materials. Silicon suboxide-like materials may be a material having similar properties as silicon suboxide, and may include one or more of (e.g., may be one or more selected from) Si and/or $SiO_2$, for example, and thus have a composition generally represented as $SiO_x$ (0<x<2). A C rate is a measure of the rate at which a battery is discharged relative to its maximum capacity. A 1.0 C rate means a discharge current which will discharge the entire battery in one hour, e.g., a 1.0 C rate for a battery having a discharge capacity of 1.6 ampere-hours would be a discharge current of 1.6 amperes. For example, a 5.0 C rate for this battery would be 8.0 amperes. For example, a 0.5 C rate for this battery would be 0.8 amperes.

Hereinbelow, a composite anode active material according to one or more embodiments, and an anode and a lithium battery including the same, will be described in greater detail.

The composite anode active material may include: a silicon-containing composite structure; a first carbon-based coating layer including first amorphous carbon and disposed on the silicon-containing composite structure; and second amorphous carbon disposed within the silicon-containing composite structure, wherein the silicon-containing composite structure may include porous silicon secondary particles; and first carbon flakes disposed on the porous silicon secondary particle, wherein the porous silicon secondary particles may each include (e.g., formed by) an agglomerate of a plurality of silicon composite primary particles, wherein the silicon composite primary particles may include silicon; a silicon suboxide ($SiO_x$, $0<x<2$) disposed on the silicon; and second carbon flakes disposed on the silicon suboxide, and wherein the second porous carbon may be disposed in pores of the porous silicon secondary particle and the second amorphous carbon may include a heterogeneous element which belongs to at least one of (e.g., at least one selected from) Group 15 and/or Group 17 of the Periodic Table.

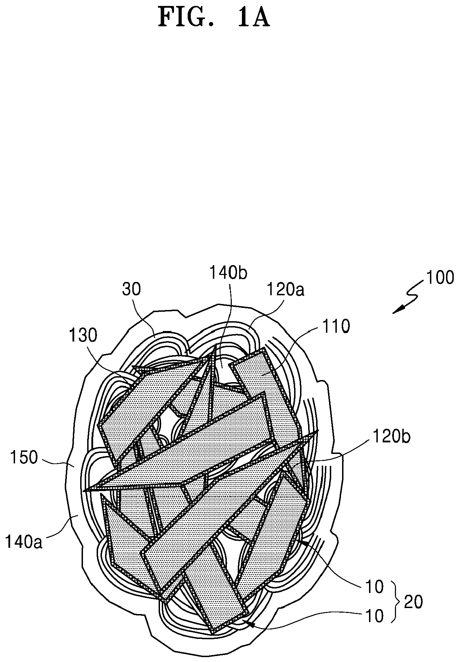

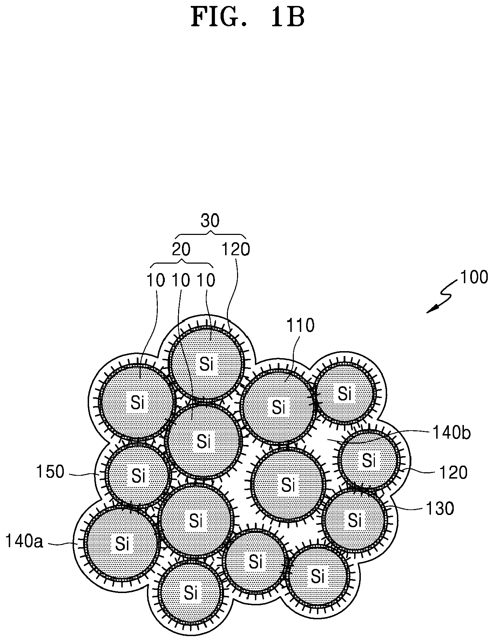

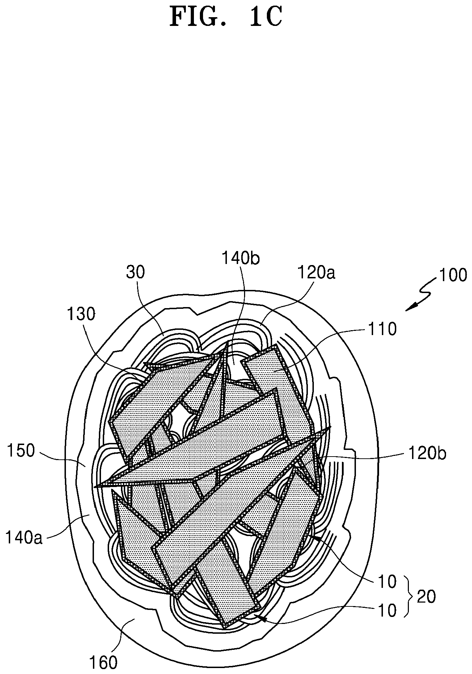

Referring to FIGs. 1A to 1D, a composite anode active material 100 may include: a silicon-containing composite structure 30; a first carbon-based coating layer 150 including first amorphous carbon 140a and disposed on the silicon-containing composite structure 30; and second amorphous carbon 140b disposed within the silicon-containing composite structure 30, wherein each silicon-containing composite structure 30 may include a porous silicon secondary particle 20; and first carbon flakes 120a disposed on the porous silicon secondary particle 20, wherein the porous silicon secondary particles 20 may each include an agglomerate of a plurality of silicon composite primary particles 10, wherein the silicon composite primary particles 10 may include silicon 110; a silicon suboxide 130 ($SiO_x$, $0<x<2$) disposed on the silicon 110; and second carbon flakes 120b disposed on the silicon suboxide 130, and wherein the second amorphous carbon 140b may be disposed in pores of the porous silicon secondary particle 20, and the second amorphous carbon 140b may include a heterogeneous element belonging to at least one of (e.g., at least one selected from) Group 15 and/or Group 17 of the Periodic Table. As shown in FIGs. 1A and 1C, the carbon flake 120 may include first carbon flakes 120a and second carbon flakes 120b. The composite anode active material 100 may have a structure including, for example, a core; and a shell disposed on and conforming to a surface of the core. The core may include the silicon-containing composite structure 30; and the second amorphous carbon 140b disposed within the silicon-containing composite structure 30. The shell may be disposed on the silicon-containing composite structure 30 and include the first carbon-based coating layer 150. The first carbon-based coating layer 150 may include the first amorphous carbon 140a.

Hereinafter, the following description is made for the purpose of providing a basis (including a theoretical basis) that supports an excellent or suitable effect of a composite anode active material according to one or more embodiments. However, it should be understood that the description is provided to further the understanding of the present disclosure disclosed herein and should not be construed as limiting the present disclosure in any way.

The composite anode active material may include second amorphous carbon filling the inside of the silicon-containing composite structure, and due to inclusion of a heterogeneous element in the second amorphous carbon, side reactions caused by a contact between electrolyte and silicon in the composite cathode active material during cycling of a lithium battery may be effectively suppressed or reduced. For example, as a lithium compound derived from a heterogeneous element included in the second amorphous carbon is formed within the composite anode active material, a solid electrolyte interface (SEI) having improved conductivity, mechanical properties, and stability may be formed on the inside and/or surface of the composite anode active material. The lithium compound generated in the composite anode active material may be, for example, a lithium salt, a lithium oxide, a lithium nitride, a lithium oxynitride, a lithium phosphate, or the like. Accordingly, side reactions between silicon and the electrolyte may be more effectively suppressed or reduced during cycling of the lithium battery. In addition, an increase in internal resistance of the lithium battery may be suppressed or reduced due to formation of an insulating SEI on the inside and/or surface of the composite anode active material during cycling of the lithium battery.

In addition, inclusion of the first carbon flake and the second carbon flake in the composite anode active material may lead to effective accommodation of volume changes of silicon during cycling of a lithium battery. Accordingly, cracking, isolation, and/or the like of silicon caused by volume changes of silicon during cycling of a lithium battery may be prevented or reduced. Accordingly, capacity losses of the composite anode active material may be effectively prevented or reduced. In addition, separation or the like between silicon and carbonaceous materials due to volume changes of silicon during cycling of a lithium battery may be prevented or reduced. Accordingly, an increase in the internal resistance of the lithium battery may be effectively suppressed or reduced. As a result, the lithium battery including the composite anode active material may have improved discharge capacity and cycle characteristics.

The heterogeneous element included in the second amorphous carbon 140b may be, for example, at least one of (e.g., at least one selected from) fluorine (F), nitrogen (N), and/or phosphorus (P). The heterogeneous element may be, for example, fluorine (F). The presence of heterogeneous elements in the composite anode active material 100 may be confirmed by thermogravimetric analysis, ion chromatography, or the like.

Based on the Scanning Transmission Electron Microscopy - Energy Dispersive X-ray Spectroscopy (STEM-EDS) analysis of a cross-section of the composite anode active material 100, the content (e.g., amount) of the heterogeneous element with respect to the total element content (e.g., amount) included in the silicon-containing composite structure 30 with the second amorphous carbon 140b disposed therein may be, for example, about 0.1 wt% to about 10 wt% or about 0.1 wt% to about 5 wt%. Based on an Energy Dispersive X-ray Spectroscopy (EDS) spectrum of the silicon-containing composite structure 30 including the second amorphous carbon 140b, the content (e.g., amount) of the heterogeneous element with respect to the total element content (e.g., amount) may be, for example, about 0.1 wt % to about 10 wt %, about 0.1 wt% to about 5 wt%, or about 0.1 wt% to about 3.5 wt%.

The porous silicon secondary particle 20 may be an agglomerate of a plurality of silicon composite primary particles 10, and the silicon composite primary particle 10 may include silicon 110; a silicon suboxide 130 ($SiO_x$, $0<x<2$) disposed on the silicon 110; and second carbon flakes 120b disposed on the silicon suboxide 130. The second carbon flake 120b disposed on the silicon suboxide 130 may be disposed to cover at least one surface of the silicon suboxide 130. The second carbon flake 120b may be disposed directly on the silicon suboxide 130. The second carbon flake 120b may be grown directly from the surface of the silicon suboxide 130 and disposed directly on the surface of the silicon suboxide 130. The second carbon flake 120b may completely or partially cover the surface of the silicon suboxide 130, for example. The coverage rate of the second carbon flake 120b may be, for example, about 10 % to 100 %, about 10 % to about 99 %, about 20 % to about 95 %, or about 40 % to about 90 %, with respect to the total surface area of the silicon suboxide 130. Carbon in the second carbon flake 120b may be present on the surface of the silicon 110 and/or the silicon suboxide 130 to effectively buffer volume changes of the silicon composite primary particles 10. For example, the second carbon flake 120b may have a size of about 1 nm to about 200 nm, about 5 nm to about 150 nm, or about 10 nm to about 100 nm. Here, the size refers to a diameter or a major axis length.

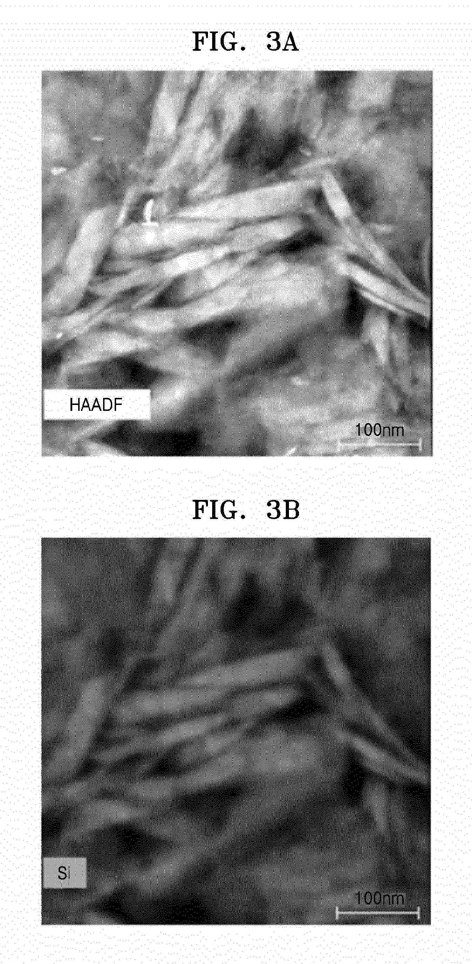

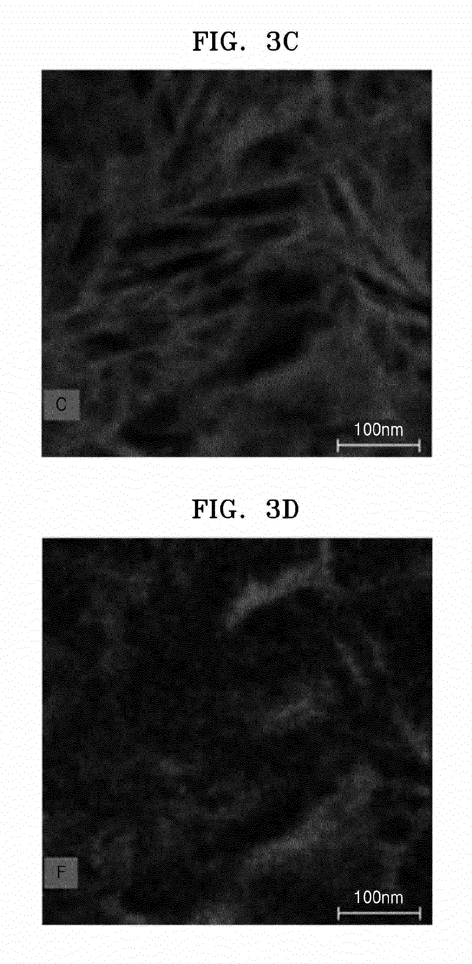

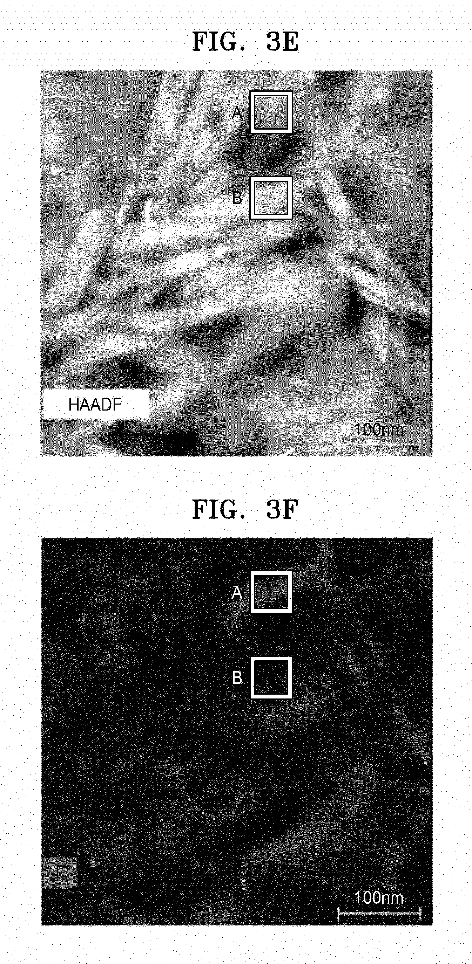

The second amorphous carbon 140b may be disposed in pores of the porous silicon secondary particle 20. The porous silicon secondary particles 20 may each include an agglomerate of a plurality of silicon composite primary particles 10, and the second amorphous carbon 140b may be disposed between adjacent silicon composite primary particles 10. The second amorphous carbon 140b may be disposed on the second carbon flakes 120b, for example. The second amorphous carbon 140b may be disposed on the second carbon flakes 120b included in the silicon composite primary particles 10. Accordingly, the second amorphous carbon 140b may be spaced apart from the silicon 110 and/or the silicon suboxide 130 by the second carbon flakes 120b. The second carbon flakes 120b may act as a kind of a buffer layer between the silicon 110 and the second amorphous carbon 140b. Accordingly, the second carbon flakes 120b may serve to effectively accommodate volume changes of the silicon 110 while maintaining conductivity between the silicon 110 and the second amorphous carbon 140b. In the second amorphous carbon 140b, a heterogeneous element may be disposed, for example, adjacent to the silicon 110. Referring to FIG. 3, a heterogeneous element, for example, fluorine (F) may be disposed adjacent to silicon 110. As the heterogeneous element is disposed adjacent to the silicon 100, a solid electrolyte interface (SEI) having improved conductivity and mechanical properties may be formed in areas adjacent to the silicon 110, thus effectively preventing or reducing degradation of the silicon 110.

The composite anode active material 100 may include a first carbon-based coating layer 150 disposed on the silicon-containing composite structure 30, and the first carbon-based coating layer 150 may include first amorphous carbon 140a.

The first amorphous carbon 140a may include a heterogeneous element. The heterogeneous element included in the first amorphous carbon 140a may be, for example, at least one of (e.g., at least one selected from) fluorine (F), nitrogen (N), and/or phosphorus (P). The heterogeneous element may be, for example, fluorine (F).

Based on the STEM-EDS analysis of a cross-section of the composite anode active material 100, the content (e.g., amount) of heterogeneous elements with respect to the total element content (e.g., amount) included in the silicon-containing composite structure 30 coated with the first carbon-based coating layer containing the first amorphous carbon, may be, for example, about 0.1 wt% to about 10 wt% or about 0.1 wt% to about 5 wt%. Based on an EDS spectrum of the first carbon-based coating layer 150 including the first amorphous carbon 140a, the content (e.g., amount) of heterogeneous elements with respect to the total element content (e.g., amount) may be, for example, about 0.1 wt % to about 10 wt %, or about 0.1 wt% to about 5 wt%.

For example, the content (e.g., amount) of heterogeneous elements included in the composite anode active material 100 may be about 0.1 wt% to about 10 wt% or about 0.1 wt% to about 5 wt% with respect to the total weight of the composite anode active material 100. As the composite anode active material 100 includes heterogeneous elements within the above ranges, further improvement in cycle characteristics of a lithium battery including the composite anode active material 100 may be achieved. The content (e.g., amount) of heterogeneous elements included in the composite anode active material 100 may be confirmed by, for example, X-ray Photoelectron Spectroscopy (XPS), Energy Dispersive X-ray Spectroscopy (EDS), or the like.

The silicon-containing composite structure 30 may include, for example, porous silicon secondary particles 20; and first carbon flakes 120a disposed on the porous silicon secondary particle 20.

The first carbon flakes 120a disposed on the porous silicon secondary particle 20 may be disposed so as to cover at least one surface of the porous silicon secondary particle 20. The first carbon flakes 120a may be directly disposed on the porous silicon secondary particle 20. The first carbon flakse 120a may be directly grown from the surface of the porous silicon secondary particle 20. The first carbon flakes 120a may be directly grown from the surface of the porous silicon secondary particle 20 and directly disposed on the surface of the porous silicon secondary particle 20. The first carbon flakes 120a may completely or partially cover the surface of the porous silicon secondary particle 20. The coverage rate of the first carbon flakes 120a may be, for example, about 5 % to 100 %, about 10 % to about 99 %, about 20 % to about 95 %, or about 40 % to about 90 %, with respect to the total surface area of the porous silicon secondary particle 20. Carbon in the first carbon flakes 120a may be present on the surface of the porous silicon secondary particle 20 to effectively buffer volume changes of the porous silicon secondary particle 20. For example, the porous silicon secondary particle 20 may have a size of about 1 μm to about 10 μm, about 2 μm to about 8 μm, or about 3 μm to about 7 μm. For example, the first carbon flakes 120a may each have a size (or may have an average size) of about 1 nm to about 200 nm, about 5 nm to about 150 nm, or about 10 nm to about 100 nm. Here, the size refers to a diameter or a major axis length.

The silicon-containing composite structure 30 may include porous silicon secondary particles 20, and the first amorphous carbon 140a may be disposed on the porous silicon secondary particles 20. The first amorphous carbon 140a may form a first porous coating layer 150. The first amorphous carbon 140a may be disposed on the first carbon flakes 120a, for example. The first amorphous carbon 140a may be disposed on the first carbon flakes 120a included in the silicon-containing composite structure 30. Accordingly, the first amorphous carbon 140a may be spaced apart from the silicon 110 and/or the silicon suboxide 130 included in the porous silicon secondary particle 20 by the first carbon flakes 120a. The first carbon flakes 120a may act as a kind of a buffer layer between the silicon 110 and the first amorphous carbon 140a. Accordingly, the first carbon flakes 120a may serve to effectively accommodate volume changes of the silicon 110 while maintaining conductivity between the silicon 110 and the first amorphous carbon 140a.

The composite anode active material 100 may have a porosity of, for example, 30% or less, 20% or less, 10% or less, 5% or less, 3% or less, or 1% or less. The composite anode active material may be non-porous, for example. The porosity of the composite anode active material may be, for example, 0% to about 30%, 0% to about 20%, 0% to about 10%, or 0% to about 5%. The porosity of the composite anode active material may be, for example, about 0.01% to about 5%, or 0%. Pores may not be substantially observable from a scanning electron microscope image of a cross-section of the composite anode active material. The porosity of the composite anode active material may be calculated from, for example, a ratio of the area occupied by pores to the total cross-sectional area in a scanning electron microscope image of a cross section of the composite anode active material. Alternatively, the porosity of the composite anode active material may be measured by mercury porosimetry or nitrogen porosimetry.

The first carbon-based coating layer 150 disposed on the silicon-containing composite structure 30 may be non-porous. Pores may not be substantially observable from a scanning electron microscope image of a cross-section of the first carbon-based coating layer 150.

The first carbon-based coating layer 150 may have a thickness of, for example, about 1 nm to about 5,000 nm, about 10 nm to about 2,000 nm, or about 5 nm to about 2,500 nm. As the first carbon-based coating layer has a thickness within the above ranges, further improvement in cycle characteristics of a lithium battery employing the composite anode active material may be achieved.

The silicon-containing composite structure 30 may include first carbon flakes 120a and second carbon flakes 120b. For example, the first carbon flakes 120a and the second carbon flakes 120b may be carbon flakes substantially identical to each other. The first carbon flakes 120a and the second carbon flakes 120b may be any carbon-based material having a flake shape. The first carbon flakes 120a and the second carbon flakes 120b may, for example, each independently be (e.g., may each independently be selected from among) graphene, graphite, carbon fiber, graphitic carbon, graphene oxide, and/or a mixture thereof. The silicon-containing composite structure 30 may include, for example, first graphene and second graphene as the first carbon flakes 120a and the second carbon flakes 120b, respectively. The first graphene and the second graphene may each have a structure such as a nanosheet, a membrane (or film), or a flake. The term "nanosheet" refers to a structure of graphene formed in an irregular form to a thickness of 1,000 nm or less, for example, about 1 nm to about 1,000 nm, on the silicon suboxide or porous silicon secondary particle. The term "film" refers to a continuous, substantially uniform structure of graphene formed on the silicon suboxide or porous silicon secondary particle.

The composite anode active material 100 may include a first carbon-based coating layer 150 disposed on the silicon-containing composite structure 30. The first carbon-based coating layer 150 may serve to further improve physical stability of the silicon-containing composite structure 30 and more effectively prevent or reduce side reactions between silicon and electrolyte during cycling. The first carbon-based coating layer 150 may include first amorphous carbon 140a. The first carbon-based coating layer 150 may include high-density first amorphous carbon 140a. The first amorphous carbon 140a may include, for example, pitch carbon, soft carbon, hard carbon, mesophase pitch carbide, calcined cokes, carbon fiber, or a mixture thereof. The first carbon-based coating layer 140a may further include crystalline carbon. Further inclusion of crystalline carbon in the first carbon-based coating layer 150 may achieve a buffering effect more effectively against volume changes of the silicon-containing composite structure. Crystalline carbon may be, for example, natural graphite, artificial graphite, graphene, fullerene, carbon nanotube, or a mixture thereof.

The composite anode active material 100 may include second amorphous carbon 140b disposed within the silicon-containing composite structure 30. The silicon-containing composite structure 30 may include porous silicon secondary particles 20, and the second amorphous carbon 140b may be disposed within pores of the porous silicon secondary particles 20. The second amorphous carbon 140b may be disposed between a plurality of silicon composite primary particles 10 constituting the porous silicon secondary particles 20. The silicon composite primary particles 10 may include, for example, silicon 110; a silicon suboxide 130 ($SiO_x$, 0<x<2) disposed on the silicon 110; second carbon flakes 120b disposed on the silicon suboxide 130; and a second amorphous carbon 140b disposed on the second carbon flakes 120b. As pores inside the silicon-containing composite structure 30 are densely filled with the second amorphous carbon 140b, the silicon-containing composite structure 30 may have a dense cluster having a non-porous structure. As the silicon-containing composite structure 30 has such a non-porous structure, side reactions with electrolyte during cycling may be further reduced, and volume changes of silicon may be more effectively mitigated. The second amorphous carbon 140b may include, for example, polymer carbide, pitch carbon, soft carbon, hard carbon, mesophase pitch carbide, calcined cokes, carbon fiber, or a mixture thereof.

In case of carbon in the first carbon flakes 120a and carbon in the second carbon flakes 120b are collectively referred to as first carbon, and carbon in the first amorphous carbon 140a and carbon in the second amorphous carbon 140b are collectively referred to as second carbon, the mixing ratio of a total weight of the first carbon to a total weight of the second carbon in the silicon-containing composite structure 30 may be, for example, about 30:1 to about 1:3, about 20:1 to about 1:1, or about 10:1 to about 1:0.9. As the mixing ratio of the first carbon to the second carbon is within the above ranges, a lithium battery with improved cycle characteristics may be provided. The mixing ratio of the first carbon to the second carbon may be identified by thermogravimetric analysis. The first carbon may be associated with a peak appearing in the region between about 700 °C to about 750 °C, and the second carbon may be associated with a peak appearing in the region between about 600 °C to about 650 °C. Thermogravimetric analysis may be carried out for example, in the range of about 25 °C to about 1,000 °C in an ambient atmosphere, at a temperature elevation rate of about 10 °C/min. For example, the first carbon may be crystalline carbon, and for example, the second carbon may be amorphous carbon.

The composite anode active material 100 may have, for example, a non-spherical shape. The silicon-containing composite structure 30 may have a circularity of, for example, 0.9 or less. The silicon-containing composite structure 30 may have a circularity of, for example, about 0.7 to about 0.9, about 0.8 to about 0.9, or about 0.85 to about 0.9. Circularity may be defined as $4\pi A/P^2$ (A represents area, and P represents perimeter), for example.

The composite anode active material 100 may have a specific surface area of, for example, about 1 $m^2$/g to about 20 $m^2$/g, about 3 $m^2$/g to about 18 $m^2$/g, or about 5 $m^2$/g to about 15 $m^2$/g. If (e.g., when) the composite anode active material has a specific surface area within the above ranges, a lithium battery employing the composite anode active material may have further improved cycle characteristics.

The silicon composite primary particles 10 may each include: silicon 110; a silicon suboxide 130 ($SiO_x$, 0<x<2) disposed on at least one surface of the silicon; and second carbon flakes 120b disposed on one surface of the silicon suboxide. The silicon 110 may have, for example, a eutectic shape, an acicular shape, a spherical shape, or a combination thereof. The silicon 110 may have any suitable shape, not limited to any specific form. For example, the silicon 110 may be in the form of (e.g., in the form comprising), for example, one or more spheres, nanowires, needles, rods, particles, nanotubes, nanorods, wafers, nanoribbons, or a combination thereof. The silicon may have an average size of about 10 nm to about 1,000 nm, about 10 nm to about 500 nm, about 20 nm to about 300 nm, or about 50 nm to about 200 nm. The average size of silicon may refer to an average particle diameter in case of the silicon is a spherical particle, or may refer to a major axis length, a length or a thickness if the silicon is a non-spherical particle, e.g., a eutectic particle or an acicular particle. In the silicon composite primary particles 10, the silicon suboxide 130 ($SiO_x$, 0<x<2) disposed on the silicon 110 may be placed so as to cover at least one surface of the silicon. The silicon suboxide 130 may be disposed directly on the silicon 110. The silicon suboxide 130 may entirely or partially cover the surface of the silicon 110. The coverage ratio of the silicon suboxide 130 may be, for example, about 1 % to 100 %, about 5 % to about 99 %, about 10 % to about 95 %, or about 20 % to about 90 % with respect to the total surface area of the silicon 110.

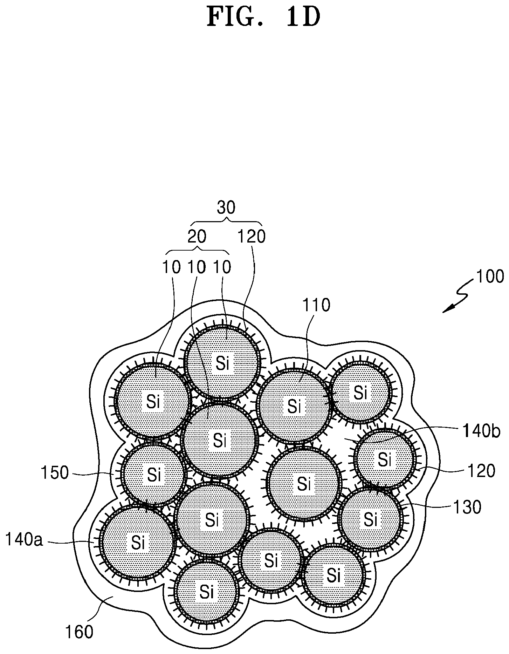

Referring to FIGs. 1C and 1D, the composite anode active material 100 may further include a second carbon-based coating layer 160 disposed on the first carbon-based coating layer 150. The composite anode active material 100 may include: a silicon-containing composite structure 30; a first carbon-based coating layer 150 disposed on the silicon-containing composite structure 30; and a second carbon-based coating layer 160 disposed on the first carbon-based coating layer 150. The second carbon-based coating layer 160 may further improve physical stability of the silicon-containing composite structure 30 and more effectively prevent or reduce side reactions between the silicon 110 and the electrolyte during cycling. The second carbon-based coating layer 160 may include third amorphous carbon 140c. The second carbon-based coating layer 160 may include third amorphous carbon 140c having a high density. The third amorphous carbon 140c may not include a heterogeneous element belonging to at least one of (e.g., at least one selected from) Group 15 and/or Group 17 of the Periodic Table. Therefore, the second carbon-based coating layer 160 may be free of heterogeneous elements. That is, the third amorphous carbon 140c may be free of heterogeneous elements. The third amorphous carbon 140c may include, for example, pitch carbon, soft carbon, hard carbon, mesophase pitch carbide, calcined cokes, carbon fiber, or a mixture thereof. The second carbon-based coating layer 160 may further include crystalline carbon. Further inclusion of crystalline carbon in the second carbon-based coating layer 160 may achieve more effective buffering against volume changes of the silicon-containing composite structure 30. Crystalline carbon may be, for example, natural graphite, artificial graphite, graphene, fullerene, carbon nanotube, or a mixture thereof. The third amorphous carbon 140c may include, for example, pitch carbon, soft carbon, hard carbon, mesophase pitch carbide, calcined cokes, carbon fiber, or a mixture thereof.

The composite anode active material 100 including the second carbon-based coating layer 160 may have, for example, a spherical shape. The composite anode active material 100 including the second carbon-based coating layer 160 may have a circularity of, for example, 0.9 or more. The circularity of the composite anode active material 100 including the second carbon-based coating layer 160 may be, for example, about 0.9 to about 0.99, about 0.9 to about 0.98, or about 0.9 to about 0.95. Circularity may be defined as $4A/P^2$ (A represents area, and P represents perimeter), for example.

The composite anode active material 100 including the second carbon-based coating layer 160 may have a specific surface area of, for example, about 1 $m^2$/g to about 10 $m^2$/g, about 2 $m^2$/g to about 9 $m^2$/g, or about 4 $m^2$/g to about 8 $m^2$/g. As the composite anode active material 100 including the second carbon-based coating layer 160 has a specific surface area within the above ranges, further improvement in cycle characteristics of a lithium battery employing the composite anode active material 100 may be achieved.

Referring to FIGS. 1A to 1D, the composite anode active material 100 may have an average particle diameter (D50) of about 1 μm to about 10 μm, about 3 μm to about 10 μm, or about 5 μm to about 10 μm, for example. The composite anode active material 100 may have a particle diameter (D10) of about 0.1 μm to about 7 μm, about 0.5 μm to about 7 μm, or about 1 μm to about 7 μm, for example. The composite anode active material 100 may have a particle diameter (D90) of about 10 μm to about 30 μm, about 10 μm to about 27 μm, or about 10 μm to about 25 μm, for example. As the composite anode active material 100 has an average particle diameter (D50), a particle diameter (D10), and/or a particle diameter (D90) within the above ranges, further improvement in cycle characteristics of a lithium battery employing the composite anode active material may be achieved.

The composite anode active material 100 may include the silicon-containing composite structure 30 and may further include a lithium compound disposed within the silicon-containing composite structure 30. For example, as the composite anode active material 100, after being assembled into a lithium battery, undergoes cycling, the composite anode active material 100 may further include therein such a lithium compound derived from a heterogeneous element. As the composite anode active material 100 further includes such a lithium compound, reduction in internal resistance of a lithium battery including the composite anode active material 100 may be achieved, and improvement in cycle characteristics of the lithium battery may be achieved. The lithium compound may be, for example, a lithium salt, lithium oxide, lithium nitride, lithium oxynitride, lithium phosphate, and/or the like. The lithium compound may include, for example, at least one of (e.g., at least one selected from) LiF and/or $Li_2O$.

An anode according to one or more embodiments may include the above-described composite anode active material. As the anode includes the above-described composite anode active material, improved cycle characteristics and reduced volume changes may be achieved.

The anode may be prepared by a wet process, for example. The anode may be prepared by the method described as an example below; however, the method by which the anode is prepared is not necessarily limited thereto and may be adjusted according to conditions desired and/or required.

First, an anode active material composition may be prepared by combining the anode active material described above, a conductive material, a binder, and a solvent. The prepared anode active material composition may be directly coated or dried on a copper current collector to produce an anode plate having an anode active material layer formed thereon. In one or more embodiments, the anode active material composition may be cast on a separate support, and a film exfoliated from the support may be laminated on a copper current collector to thereby form an anode plate with an anode active material layer formed thereon. The anode current collector may include, for example, a base film and a metal layer disposed on one side or both sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. The polymer may be an insulating polymer. As the base film includes an insulating thermoplastic polymer, in the event of a short circuit, the base film is softened or liquefied and blocks the operation of the battery, thereby preventing or reducing a rapid increase in electric current. For example, the metal layer may include copper (Cu), stainless steel (SUS), titanium (Ti), iron (Fe), cobalt (Co), nickel (Ni), or an alloy thereof. The anode current collector may further include a metal chip and/or a lead-tab. The description provided with respect to a cathode current collector may be referred to for details of the base film, the metal layer, the metal chip, and the lead-tab of the anode current collector. As the anode current collector has the above structure, the weight of the anode may be reduced, and as a result, energy density of the anode and the lithium battery may be improved.

Examples of the conductive material may include: carbon black, graphite powder, natural graphite, artificial graphite, acetylene black, Ketjenblack, and/or carbon fibers; carbon nanotubes; metal powder, metal fibers, or metal tubes, such as copper, nickel, aluminum, silver, etc.; and/or conductive polymers such as polyphenylene derivatives and/or the like. However, the conductive material is not limited to the aforementioned components, but may be any suitable material available as a conductive material in the art.

Examples of the binder may include a vinylidene fluoride/hexafluoropropylene copolymer, polyvinylidene fluoride, polyacrylonitrile, polymethylmethacrylate, polytetrafluoroethylene (PTFE), a mixture of the aforementioned polymers, a styrene butadiene rubber-based polymer, polyacrylic acid, lithium-substituted polyacrylic acid, polyamide-imides, polyimides, and/or the like. However, the binder is not limited to the aforementioned examples and may be any suitable binder available in the art.

Examples of the solvent may include N-methyl pyrrolidone (NMP), acetone, water, etc., but the solvent is not limited to the aforementioned examples and may be any suitable solvent available in the art.

It is also possible to create pores inside an electrode plate by further adding a plasticizer and a pore-forming agent to the anode active material composition.

The amount of each of the anode active material, the conductive material, the binder, and the solvent used in the anode may be at a level generally available for use in lithium batteries. Depending on the intended purpose of use and configuration of a lithium battery, one or more of the conductive material, binder, and solvent may be omitted (e.g., not included or excluded).

The amount of the binder included in the anode may be, for example, about 0.1 wt% to about 10 wt%, or about 0.1 wt% to about 5 wt% with respect to the total weight of the anode active material layer. The amount of the conductive material included in the anode may be, for example, about 0.1 wt% to about 10 wt%, or about 0.1 wt% to about 5 wt% with respect to the total weight of the anode active material layer. The amount of the composite anode active material included in the anode may be about 0.1 wt% to about 99 wt%, about 0.1 wt% to about 90 wt%, about 0.1 wt% to about 50 wt%, about 0.1 wt% to about 30 wt%, about 0.1 wt% to about 20 wt%, or about 0.1 wt% to about 10 wt%, with respect to the total weight of the anode active material layer.

The anode may further include other generally available and/or suitable anode active materials in addition to the above-described composite anode active material.

For example, the anode active material may include one or more of (e.g., one or more selected from among) lithium metal, a metal alloyable with lithium, a transition metal oxide, a non-transition metal oxide, and/or a carbonaceous material, but the present disclosure is not limited to the aforementioned examples and may include any suitable anode active material available for a lithium battery in the art.

Examples of the metal alloyable with lithium may include Si, Sn, Al, Ge, Pb, Bi, Sb, a Si-X alloy (wherein X is an alkali metal, an alkaline earth metal, an element of Group 13, an element of Group 14, a transition metal, a rare earth metal, or a combination thereof, but not Si), a Sn-X alloy (wherein X is an alkali metal, an alkaline earth metal, an element of Group 13, an element of Group 14, a transition metal, a rare earth metal, or a combination thereof, but not Sn) and/or the like. For example, X may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

Examples of the transition metal oxide may include a lithium titanium oxide, a vanadium oxide, a lithium vanadium oxide, and/or the like.

Examples of the non-transition metal oxide may include $SnO_2$ and/or the like.

Examples of the carbonaceous material may include a crystalline carbon, an amorphous carbon, or a mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and the like.

The total amount of the composite anode active material and other conventional anode active materials included in the anode may be about 80 wt% to about 99 wt%, about 90 wt% to about 99 wt%, or about 90 wt% to about 95 wt%, with respect to the total weight of the anode active material layer.

In one or more embodiments, the anode may be a dry anode produced by a dry process.

The dry anode may include a composite anode active material, a dry conductive material, and a dry binder.

A method of preparing a dry anode may include, for example: preparing a dry mixture by dry-mixing a composite anode active material, a dry conductive material, and a dry binder; providing an anode current collector; disposing an interlayer on one side of the anode current collector; and disposing the dry mixture on the interlayer, followed by rolling, to thereby produce an anode having an anode active material layer disposed on one surface of the anode current collector.

First, a dry mixture may be prepared by dry-mixing a composite anode active material, a dry conductive material, and a dry binder. The term "dry-mixing" may refer to a process of mixing in the absence of a process solvent. Process solvent may be a solvent used in the preparation of electrode slurry, for example. For example, the process solvent may be water, NMP, or the like, but the present disclosure is not limited thereto and may be any process solvent for use in the preparation of electrode slurry. The dry-mixing may be carried out using an agitator, for example, at a temperature of about 25 °C to about 65 °C. The dry-mixing may be carried out using an agitator at a rotation rate of, for example, about 10 rpm to about 10,000 rpm, or about 100 rpm to about 10,000 rpm. The dry-mixing may be carried out using an agitator for a duration of about 1 minute to about 200 minutes, or about 1 minute to about 150 minutes, for example. The composite anode active material may be a dry composite anode active material.

The dry-mixing may be performed once or more, for example. First, a first mixture may be prepared through first dry-mixing of a dry composite anode active material, a dry conductive material, and a dry binder. The first dry-mixing may be carried out, for example, at a temperature of about 25 °C to about 65 °C, at a rotation rate of 2,000 rpm or less, for a duration of 15 minutes or less. For example, the first dry-mixing may be carried out at a temperature of about 25 °C to about 65 °C, at a rotation rate of about 500 rpm to about 2,000 rpm, for a duration of about 5 minutes to about 15 minutes. Through the first dry-mixing, the dry composite anode active material, the dry conductive material, and the dry binder may be substantially uniformly mixed. Next, a second mixture may be prepared through second dry-mixing of a dry composite anode active material, a dry conductive material, and a dry binder. For example, the second dry-mixing may be carried out at a temperature of about 25 °C to about 65 °C, at a rotation rate of 2,000 rpm or less, for a duration of 15 minutes or less. For example, the second dry-mixing may be carried out at a temperature of about 25 °C to about 65 °C, at a rotation rate of about 4,000 rpm to about 9,000 rpm, for a duration of about 10 minutes to about 60 minutes. Through the second dry-mixing, a dry mixture containing a fibrillated dry binder may be obtained.

The agitator may be, for example, a kneader. The agitator may include, for example, a chamber; at least one rotary shaft rotating inside the chamber; and a blade rotatably coupled to the rotary shaft and arranged in a longitudinal direction of the rotary shaft. The blade may be, for example, one or more of (e.g., one or more selected from among) a ribbon blade, a sigma blade, a Z blade, a dispersing blade, and/or a screw blade. By including the blade, even without solvent, a dough-like mixture may be prepared by effectively mixing the dry anode composite active material, the dry conductive material, and the dry binder.

The prepared dry mixture may be introduced into an extrusion device and extruded into a sheet form. The pressure during extrusion may be, for example, about 4 MPa to about 100 MPa, or about 10 MPa to about 90 MPa. The extruded product obtained in a sheet form may be an anode active material layer sheet.

Examples of the dry conductive material may include: carbon black, graphite powder, natural graphite, artificial graphite, acetylene black, Ketjen black, and/or carbon fibers; carbon nanotubes; metal powder, metal fibers, and/or metal tubes, such as copper, nickel, aluminum, silver, etc.; and/or conductive polymers such as polyphenylene derivatives and/or the like. However, the dry conductive material is not limited to the aforementioned components, but may be any suitable material available as a conductive material in the art. The conductive material may be, for example, a carbon-based conductive material. The dry conductive material may be a conductive material that does not come in contact with processing solvents.

Examples of the dry binder may include a vinylidene fluoride/hexafluoropropylene copolymer, polyvinylidene fluoride, polyacrylonitrile, polymethylmethacrylate, polytetrafluoroethylene (PTFE), a mixture of the aforementioned polymers, a styrene butadiene rubber-based polymer, and the like. However, the dry binder is not necessarily limited to the aforementioned examples, but may be any suitable dry binder available in the art. Examples of the dry binder may include polytetrafluoroethylene (PTFE). The dry binder may be a binder that does not come in contact with processing solvents.

It is also possible to create pores inside an anode active material layer by further adding a plasticizer and a pore-forming agent to a dry mixture.

The amount of each of the dry composite anode active material, the dry conductive material, and the dry binder used in the anode active material layer may be in the same respective ranges as those in a wet anode.

Next, an anode current collector may be provided. The anode current collector may be, for example, an aluminum foil or a copper foil. For example, the anode current collector may include a base film and a metal layer disposed on one side or both sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), and/or a combination thereof. The polymer may be an insulating polymer. As the base film includes an insulating thermoplastic polymer, in the event of a short circuit, the base film is softened or liquefied and blocks the operation of the battery, thereby preventing or reducing a rapid increase in electrical current. For example, the metal layer may include copper (Cu), stainless steel (SUS), titanium (Ti), iron (Fe), cobalt (Co), nickel (Ni), and/or an alloy thereof. The anode current collector may further include a metal chip and/or a lead-tab. The description provided in more detail below with respect to a cathode current collector may be referred to for details of the base film, the metal layer, the metal chip, and the lead-tab of the anode current collector. As the anode current collector has the above structure, the weight of the anode may be reduced, and as a result, energy density of the anode and the lithium battery may be improved.

Next, an interlayer may be disposed on at least one surface of the anode current collector. The interlayer may include a carbon-based conductive material and a binder. The interlayer may be omitted (e.g., excluded or not included).

Next, the prepared anode active material layer sheet may be placed on the interlayer and then rolled to thereby produce an anode having an anode active material layer disposed on one surface of the anode current collector. The interlayer may be disposed between the anode current collector and the anode active material layer. The rolling may be performed by for example, a roll press, a flat press, and/or the like, but the present disclosure is not necessarily limited thereto. The pressure during rolling is not limited to any specific range, but for example, may be in a range of about 0.1 ton/cm$^2$ to about 10.0 ton/cm$^2$. If the pressure during rolling excessively increases, it may cause cracks in the anode current collector. If the pressure during rolling is excessively low, the binding strength between the anode current collector and the anode active material layer may deteriorate.

A lithium battery according to one or more embodiments employs an anode containing the above-described composite anode active material.

By employing an anode containing the above-described composite anode active material, the lithium battery may provide improved cycle characteristics.

The lithium battery may be prepared by an example method described below, but the method is not necessarily limited thereto and can be adjusted according to desired or required conditions.

First, by the method of preparing an anode described above, an anode may be prepared.

Next, a cathode active material composition containing a mixture of a cathode active material, a conductive material, a binder, and a solvent may be prepared. The cathode active material composition may be directly coated and dried on an aluminum current collector to form a cathode plate. In one or more embodiments, the cathode active material composition may be cast on a separate support, and a film exfoliated from the support may be laminated on an aluminum current collector to thereby form a cathode plate.

The cathode active material may be a lithium-containing metal oxide, and may utilize any lithium-containing metal oxides generally available for use in the art without limitations. Examples of the cathode active material may include one or more of (e.g., one or more selected from) composite oxides of lithium with a metal of (e.g., a metal selected from among) cobalt, manganese, nickel, and/or a combination thereof. The cathode active material may include at least one of (e.g., at least one selected from the group consisting of) lithium cobalt oxide, lithium nickel cobalt manganese oxide, lithium nickel cobalt aluminum oxide, lithium iron phosphate, and/or lithium manganese oxide. However, the cathode active material is not necessarily limited to the aforementioned components, but may be any suitable cathode active material for a lithium battery available in the art.

For example, the cathode active material may be a compound represented by any one of (e.g., selected from among) the following chemical formulas: $Li_aA_{1-b}B_bD_2$ (in the formula, $0.90 \leq a \leq 1.8$ and $0 \leq b \leq 0.5$); $Li_aE_{1-b}B_bO_{2-c}D_c$ (in the formula, $0.90 \leq a \leq 1.8$, $0 \leq b \leq 0.5$, and $0 \leq c \leq 0.05$); $LiE_{2-b}B_bO_{4-c}D_c$ (in the formula, $0 \leq b \leq 0.5$ and $0 \leq c \leq 0.05$); $Li_aNi_{1-b-c}Co_bB_cD_\alpha$ (in the formula, $0.90 \leq a \leq 1.8$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (in the formula, $0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_2$ (in the formula, $0.90 \leq a \leq 1.8$, $0 \leq b \leq 0.5$, $0 \leq c \leq 0.05$, and $0 < \alpha < 2$); $Li_aNi_{1-b-c}Mn_bB_cD_\alpha$ (in the formula, $0.90 \leq a \leq 1.8$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (in the formula, $0.90 \leq a \leq 1.8$, $0 \leq b \leq 0.5$, $0 \leq c \leq 0.05$, and $0 < \alpha < 2$); $Li_aNi_{1-b-c}Mn_bB_cO_{2-\alpha}F_2$ (in the formula, $0.90 \leq a \leq 1.8$, $0 \leq b \leq 0.5$, $0 \leq c \leq 0.05$, and $0 < \alpha < 2$); $Li_aNi_bE_cG_dO_2$ (in the formula, $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (in the formula, $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (in the formula, $0.90 \leq a \leq 1.8$ and $0.001 \leq b \leq 0.1$); $Li_aCoG_bO_2$ (in the formula, $0.90 \leq a \leq 1.8$ and $0.001 \leq b \leq 0.1$); $Li_aMnG_bO_2$ (in the formula, $0.90 \leq a \leq 1.8$ and $0.001 \leq b \leq 0.1$); $Li_aMn_2G_bO_4$ (in the formula, $0.90 \leq a \leq 1.8$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3 (0 \leq f \leq 2)$; $Li_{(3-f)}Fe_2(PO_4)_3 (0 \leq f \leq 2)$; and/or $LiFePO_4$.

In the above-described formulas, A may be Ni, Co, Mn, or a combination thereof; B may be Al, Ni, Co, Mn, Cr, Fe, Mg, Sr, V, a rare-earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound having a coating layer added on a surface of the above compound may also be used. Furthermore, a mixture of the above compound with a compound having a coating layer added thereon may also be used. The coating layer added on the surface of the above-described compound may include, for example, compounds of a coating element, such as oxides and hydroxides of the coating element, oxyhydroxides of the coating element, oxycarbonates of the coating element, and hydroxycarbonates of the coating element. A compound forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. A method by which to form a coating layer may be selected from methods that exert no adverse effect on physical properties of the cathode active material. Examples of coating method may include spray coating, dip coating, and/or the like. Specific coating methods are generally available to those of ordinary skill in the art and therefore, detailed descriptions thereof may be omitted.

For example, the cathode active material may utilize $LiNiO_2$, $LiCoO_2$, $LiMn_xO_{2x}(x=1, 2)$, $LiNi_{1-x}Mn_xO_2 (0 < x < 1)$, $LiNi_{1-x-y}Co_xMn_yO_2 (0 \leq x \leq 0.5, 0 \leq y \leq 0.5)$, $LiFeO_2$, $V_2O_5$, TiS, MoS, or the like.

Examples of the cathode active material may include $Li_aNi_xCo_yM_zO_{2-b}A_b$ ($1.0 \leq a \leq 1.2$, $0 \leq b \leq 0.2$, $0.8 \leq x < 1$, $0 \leq y \leq 0.3$, $0 < z \leq 0.3$, and $x+y+z=1$, wherein M is at least one of (e.g., at least one selected from the group consisting of) manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al) and/or boron (B), and A is F, S, Cl, Br, or a combination thereof); $LiNi_xCo_yMn_zO_2$ ($0.8 \leq x \leq 0.95$, $0 < y \leq 0.2$, $0 < z \leq 0.2$, and $x+y+z=1$), $LiNi_xCo_yAl_zO_2$ ($0.8 \leq x \leq 0.95$, $0 \leq y \leq 0.2$, $0 < z \leq 0.2$, and $x+y+z=1$), $LiNi_xCo_yAl_yMn_wO_2$ ($0.8 \leq x \leq 0.95$, $0 \leq y \leq 0.2$, $0 < v \leq 0.2$, $0 < w \leq 0.2$, and $x+y+v+w=1$), $Li_aNi_xMn_yM'_zO_{2-b}A_b$ ($1.0 \leq a \leq 1.2$, $0 \leq b \leq 0.2$, $0 < x \leq 0.3$, $0.5 \leq y < 1$, $0 < z \leq 0.3$, and $x+y+z=1$, wherein M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B) or a combination thereof, and A is F, S, Cl, Br or a combination thereof), and/or the like.

The cathode active material composition may utilize the same conductive material, binder and solvent as the ones used in the anode active material composition. Also, a plasticizer may be further added to the cathode active material composition and/or anode active material composition to form pores within the electrode plate.

The amount of each of the cathode active material, the conductive material, the binder, and the solvent may be at a level generally available for use in a lithium battery. Depending on the intended purpose of use and configuration of a lithium battery, one or more of (e.g., selected from among) the conductive material, the binder, and/or the solvent may be omitted (e.g., excluded or not included).

The amount of the binder included in the cathode may be, for example, about 0.1 wt% to about 10 wt%, or about 0.1 wt% to about 5 wt% with respect to the total weight of the cathode active material layer. The amount of the conductive material included in the cathode may be, for example, about 0.1 wt% to about 10 wt%, or about 0.1 wt% to about 5 wt% with respect to the total weight of the cathode active material layer. The amount of the cathode active material included in the cathode may be, for example, about 70 wt% to about 99 wt%, about 90 wt% to about 99 wt%, or about 95 wt% to about 99 wt% with respect to the total weight of the cathode active material layer. For example, the cathode current collector may utilize a plate, a foil, or the like, composed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. For example, the cathode current collector may have a thickness of about 1 $\mu$m to about 100 $\mu$m, about 1 $\mu$m to about 50 $\mu$m, about 5 $\mu$m to about 25 $\mu$m, or about 10 $\mu$m to about 20 $\mu$m. The cathode current collector may include, for example, a base film and a metal layer disposed on one side or both sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. For example, the polymer may be an insulating body. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may act as an electrochemical fuse by being disconnected in the event of an overcurrent, to thereby provide protection against short circuits. Limiting current and peak current may be controlled through controlling the thickness of the metal layer. The metal layer may be plated or deposited on the base film. With decreasing thickness of the metal layer, the limiting current and/or peak current of the cathode current collector may decrease, and therefore, the stability of the lithium battery may be improved in case of a short circuit. A lead-tab may be added on the metal layer for external connection. The lead-tab may be welded to the metal layer or a metal layer/base film laminate by ultrasonic welding, laser welding, spot welding, or the like. As the base film and/or the metal layer melt during welding, the metal layer may be electrically connected to the lead-tab. To further secure the welding between the metal layer and the lead-tab, a metal chip may be added between the metal layer and the lead-tab. The metal chip may be a flake of the same material as the metal of the metal layer. For example, the metal chip may be a metal foil, a metal mesh, or the like. For example, the metal chip may be an aluminum foil, a copper foil, an SUS foil, or the like. By welding the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added to a portion of the metal layer. For example, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If (e.g., when) the base film has a thickness within the above ranges, reduction of the weight of the electrode assembly may be more effectively achieved. For example, the base film may have a melting point of about 100 °C to about 300 °C, about 100 °C to about 250 °C, or about 100 °C to about 200 °C. As the base film has a melting point within the above ranges, during the process of welding the lead-tab, the base film may melt and be easily bonded to the lead-tab. To improve bonding strength between the base film and the metal layer, a surface treatment such as corona treatment may be performed on the base film. For example, the metal layer may have a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If (e.g., when) the metal layer has a thickness within the above ranges, stability of the electrode assembly may be ensured while maintaining conductivity. For example, the metal chip may have a thickness of about 2 $\mu$m to about 10 $\mu$m, about 2 $\mu$m to about 7 $\mu$m, or about 4 $\mu$m to about 6 $\mu$m. If (e.g., when) the metal chip has a thickness within the above ranges, connection between the metal layer and the lead-tab may be more easily performed. As the cathode current collector has the above structure, the weight of the cathode may be reduced and as a result, energy density of the cathode and the lithium battery may be improved.

Next, a separator to be positioned between the cathode and the anode may be prepared.

The separator may be any separator commonly for use in lithium batteries. For example, the separator may be a separator capable of retaining a large quantity of electrolyte solution, while exhibiting low resistance to ion migration for the electrolyte. For example, the separator may be formed of a material of (*e.g.,* a material selected from among) glass fiber, polyester, Teflon, polyethylene, polypropylene, polytetrafluoroethylene (PTFE), and/or a combination thereof that is in the form of nonwoven fabric or woven fabric. A lithium ion battery may utilize, for example, a rollable separator formed of polyethylene, polypropylene, or the like. A lithium ion polymer battery may utilize, for example, a separator capable of retaining a large quantity of an organic electrolyte solution.

The separator may be prepared by the method described below as an example. However, the method by which to prepare the separator is not necessarily limited to this method, but may be adjusted according to conditions desired or required.

First, a separator composition may be prepared by mixing a polymer resin, a filler, and a solvent. The separator composition may be directly coated and dried on top of an electrode to thereby form a separator. In one or more embodiments, the separator may be formed by casting and drying the separator composition on a support and then laminating on top of an electrode a separator film exfoliated from the support.

The polymer used in the preparation of the separator is not particularly limited, and any suitable polymer available for use in a binder of an electrode plate may be used. For example, the polymer may utilize a vinylidene fluoride/hexafluoropropylene copolymer, polyvinylidene fluoride (PVDF), polyacrylonitrile, polymethyl methacrylate, or a mixture thereof.

Next, an electrolyte may be prepared. The electrolyte may be, for example, a liquid electrolyte, a solid electrolyte, a gel electrolyte or any combination thereof.

The electrolyte may be, for example, an organic electrolyte solution. The organic electrolyte solution may be prepared by dissolving a lithium salt in an organic solvent.

For the organic solvent, any suitable organic solvent available in the art may be used. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

For the lithium salt, any suitable lithium salt available in the art may be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (1≤x≤20 and 1≤y≤20), LiCl, LiI, or a mixture thereof.

In one or more embodiments, the electrolyte may be a solid electrolyte. The solid electrolyte may be, for example, a boron oxide, a lithium oxynitride, or the like, but the present disclosure is not limited thereto and the solid electrolyte may include any suitable solid electrolyte available in the art. The solid electrolyte may be formed on the anode by methods such as sputtering, for example, or a separate solid electrolyte sheet may be stacked on the anode.

The solid electrolyte may be, for example, an oxide-based solid electrolyte, a sulfide-based solid electrolyte, a polymer electrolyte or any combination thereof.

The solid (*e.g.,* solid-state) electrolyte may be, for example, an oxide-based solid (*e.g.,* solid-state) electrolyte. The oxide-based solid electrolyte may be at least one of (*e.g.,* at least one selected from among) $Li_{1+x+y}Al_xTi_{2-x}Si_yP_{3-y}O_{12}$ (0<x<2 and 0≤y<3), $BaTiO_3$, $Pb(Zr,Ti)O_3(PZT)$, $Pb_{1-x}La_xZr_{1-y}Ti_yO_3(PLZT)$ (0≤x<1 and 0≤y<1), $Pb(Mg_{2/3}Nb_{2/3})O_3-PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1), $Li_xLa_yTiO_3$ (0<x<2 and 0<y<3), $Li_2O$, LiOH, $Li_2CO_3$, $LiAlO_2$, $Li_2O-Al_2O_3-SiO_2-P_2O_5-TiO_2-GeO_2$, and/or $Li_{3+x}La_3M_2O_{12}$ (M = Te, Nb, or Zr, and x is an integer of 1 to 10). The solid-state electrolyte may be prepared by a sintering method or the like. For example, the oxide-based solid electrolyte may be a garnet-type solid electrolyte of (e.g., selected from among) $Li_7La_3Zr_2O_{12}$ (LLZO) and/or $Li_{3+x}La_3Zr_{2-a}M_aO_{12}$ (M-doped LLZO, M=Ga, W, Nb, Ta, or Al, and x is an integer of 1 to 10).

Examples of the sulfide-based solid (*e.g.,* solid-state) electrolyte may include lithium sulfide, silicon sulfide, phosphorus sulfide, boron sulfide, or a combination thereof. Sulfide-based solid-state electrolyte particles may include $Li_2S$, $P_2S_5$, $SiS_2$, $GeS_2$, $B_2S_3$, or a combination thereof. The sulfide-based solid-state electrolyte particles may be $Li_2S$ or $P_2S_5$. The sulfide-based solid-state electrolyte particles are known to have a higher lithium ion conductivity than that of other inorganic compounds. For example, the sulfide-based solid-state electrolyte may include $Li_2S$ and $P_2S_5$. If sulfide solid electrolyte materials constituting the sulfide-based solid electrolyte include $Li_2S-P_2S_5$, a mixing molar ratio of $Li_2S$ and $P_2S_5$ may be, for example, in a range of about 50:50 to about 90:10. In addition, a material such as $Li_3PO_4$, a halogen, a halogen compound, $Li_{2+2x}Zn_{1-x}GeO_4$ ("LISICON", 0≤x<1), $Li_{3+y}PO_{4-x}N_x$("LIPON", 0<x<4 and 0<y<3), $Li_{3.25}Ge_{0.25}P_{0.75}S_4$ ("Thio-LISICON"), and $Li_2O-Al_2O_3-TiO_2-P_2O_5$ ("LATP") may be added to an inorganic solid electrolyte such as $Li_2S-P_2S_5$, $SiS_2$, $GeS_2$, $B_2S_3$, or a combination thereof to prepare an inorganic solid electrolyte, and this inorganic solid electrolyte may be used as a sulfide solid electrolyte. Non-limiting examples of the sulfide solid electrolyte materials may include $Li_2S-P_2S_5$; $Li_2S-P_2S_5$-LiX (X=a halogen element); $Li_2S-P_2S_5-Li_2O$; $Li_2S-P_2S_5-Li_2O-LiI$; $Li_2S-SiS_2$; $Li_2S-$

$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ -$P_2S_5$-$Z_mS_n$ (0<m<10, 0<n<10, Z=Ge, Zn or Ga); $Li_2S$-$GeS_2$; $Li_2S$-$SiS_2$-$Li_3PO_4$; and $Li_2S$-$SiS_2$-$Li_pMO_q$ (0<p<10, 0<q<10, M=P, Si, Ge, B, Al, Ga or In). In this regard, the sulfide-based solid electrolyte material may be prepared by subjecting a starting material (e.g., $Li_2S$, $P_2S_5$, etc.) of the sulfide-based solid electrolyte material to a treatment such as melt quenching, mechanical milling, and/or the like. In addition, a calcination process may be performed following the above treatment. The sulfide-based solid electrolyte may be amorphous or crystalline, or may be in a mixed state thereof. For example, the polymer solid electrolyte may include a mixture of a lithium salt and a polymer, or may include a polymer having an ion-conducting functional group. For example, the polymer solid electrolyte may be a polymer electrolyte that is in a solid state at 25 °C and 1 atm. For example, the polymer solid electrolyte may not contain liquids. The polymer solid electrolyte may include a polymer. For example, the polymer may be polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or a combination thereof. However, the polymer is not limited to the aforementioned examples and may be any suitable material available in the art that is used in polymer electrolyte. The lithium salt may be any suitable lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each an integer of 1 to 20), LiCl, LiI, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more.

For example, the gel electrolyte may be a polymer gel electrolyte. For example, the gel electrolyte may have a gel state while not containing a polymer. For example, the polymer gel electrolyte may include a liquid electrolyte and a polymer, or may include an organic solvent and a polymer having an ion-conducting functional group. For example, the polymer gel electrolyte may be a polymer electrolyte that is in a gel state at 25 °C and 1 atm. For example, the polymer gel electrolyte may have a gel state without containing liquid. The liquid electrolyte used in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt and an ionic liquid. The polymer used in the polymer gel electrolyte may be (*e.g.,* may be selected from) polymers used in solid polymer electrolytes. The organic solvent may be selected from organic solvents used in liquid electrolytes. The lithium salt may be (*e.g.,* may be selected from) lithium salts used in polymer solid electrolytes. The ionic liquid may refer to a room-temperature molten salt, or a salt in a liquid state at room temperature, which consists of ions alone and has a melting point of room temperature or less. For example, the ionic liquid may be at least one of (*e.g.,* at least one selected from) compounds containing:

a) at least one cation of (*e.g.,* at least one cation selected from) ammonium, pyrrolidinium, pyridinium, pyrimidinium, imidazolium, piperidinium, pyrazolium, oxazolium, pyridazinium, phosphonium, sulfonium, triazolium, and/or a mixture thereof; and/or
b) at least one anion (*e.g.,* at least one anion selected from) $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and/or $(CF_3SO_2)_2N^-$.

For example, the polymer solid electrolyte may form a polymer gel electrolyte by being impregnated in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the gel solid electrolyte may have a weight average molecular weight of 500 Dalton or more, 1,000 Dalton or more, 10,000 Dalton or more, 100,000 Dalton or more, or 1,000,000 Dalton or more.

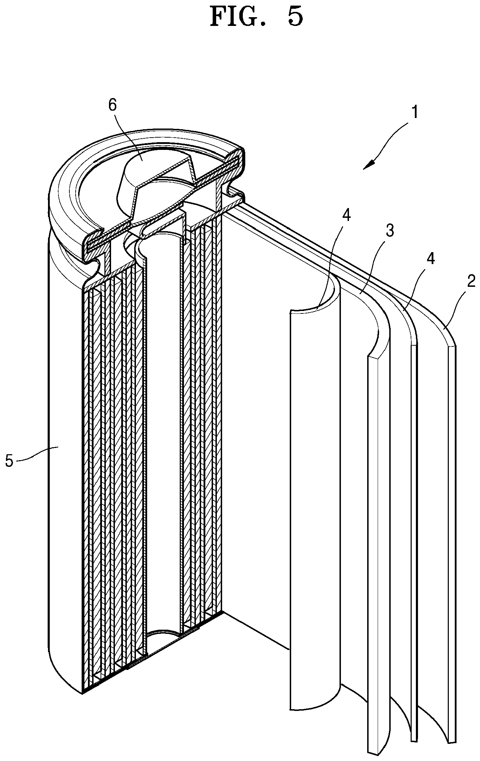

Referring to FIG. 5, a lithium battery 1 according to one or more embodiments may include a cathode 3, an anode 2, and a separator 4. The cathode 3, the anode 2, and the separator 4 may be wound or folded to form a battery structure. The formed battery structure may be accommodated in a battery case 5. The battery case 5 may be injected with an organic electrolyte solution and sealed with a cap assembly 6, thereby completing the preparation of the lithium battery 1. The battery case 5 may have a cylindrical shape, but the present disclosure is not necessarily limited thereto, and the battery case may have a polygonal shape, a thin-film shape, and/or the like.

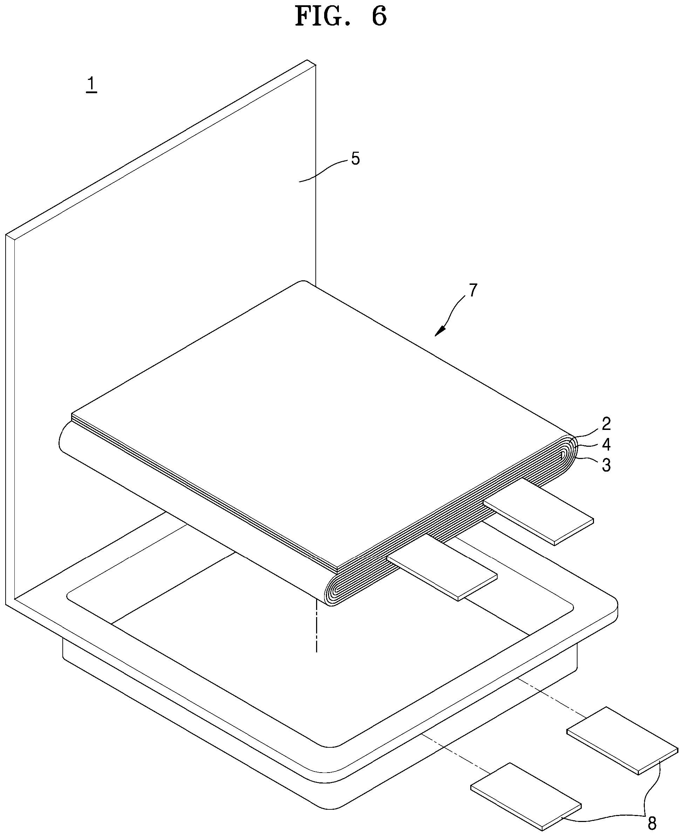

Referring to FIG. 6, a lithium battery 1' according to one or more embodiments may include a cathode 3', an anode 2', and a separator 4'. The separator 4' may be disposed between the cathode 3' and the anode 2', and the cathode 3', the anode 2', and the separator 4' may be wound or folded to form a battery structure 7'. The battery structure 7' may be accommodated in a battery case 5'. An electrode tab 8', acting as an electrical path for guiding an electrical current formed in the battery structure 7' to the outside, may be included. The battery case 5' may be injected with an organic electrolyte solution and sealed, thereby completing the preparation of the lithium battery 1'. The battery case 5' may have a polygonal shape, but the present disclosure is not necessarily limited thereto, and the battery case may also have a cylindrical shape, a thin-film shape, and/or the like, for example.

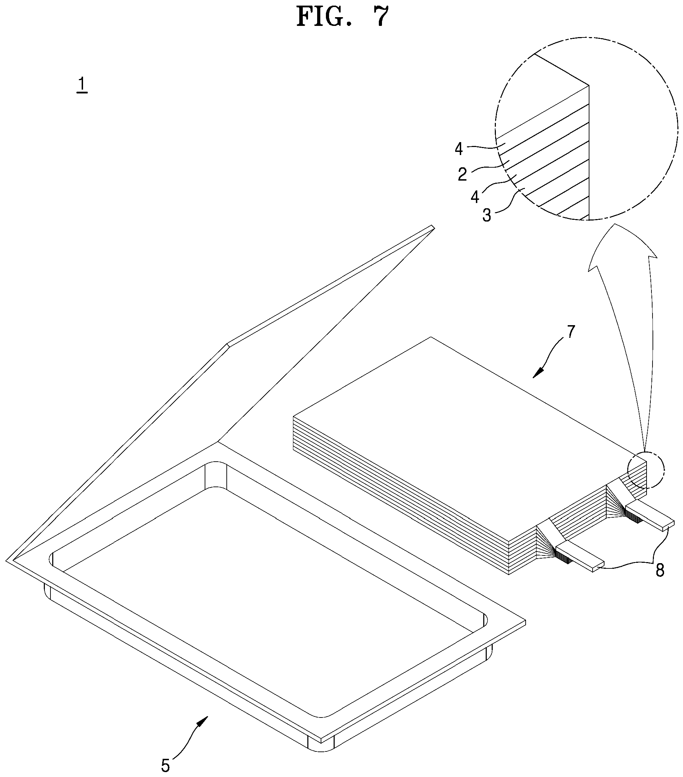

Referring to FIG. 7, a lithium battery 1" according to one or more embodiments may include a cathode 3", an anode 2", and a separator 4". The separator 4" may be disposed between the cathode 3" and the anode 2" to form a battery structure. The battery structure 7" may be stacked in a bi-cell structure and then accommodated into the battery case 5". An electrode tab 8", acting as an electrical path for guiding an electrical current generated in the battery structure 7" to the outside, may be included. The battery case 5" may be injected with an organic electrolyte solution and sealed to thereby complete the preparation of the lithium battery 1". The battery case 5" may have a polygonal shape, but the present disclosure is not necessarily limited thereto, and the battery case may also have a cylindrical shape, a thin-film shape, and/or the like, for example.

A pouch-type lithium battery corresponds to the lithium batteries shown in FIGs. 6 and 7 using a pouch as a battery case. The pouch-type lithium battery may include one or more battery structures. The battery structure may be formed by disposing a separator between a cathode and an anode. The battery structures may be stacked in a bi-cell structure, and immersed in an organic electrolyte solution, and then accommodated and sealed in a pouch, thereby completing the preparation of a pouch-type lithium battery. For example, the cathode, anode, and separator described above may be simply stacked in the form of an electrode assembly and then accommodated in a pouch, or may be wound or folded into a jelly roll-type electrode assembly and then accommodated in a pouch. Subsequently, the pouch may be injected with an organic electrolyte solution and then sealed, thereby completing the preparation of a lithium battery.

The lithium battery, due to having excellent or suitable lifespan characteristics and high-rate capability, may be used in an electric vehicle (EV), for example. For example, the lithium battery may be used in a hybrid vehicle, such as a plug-in hybrid electric vehicle (PHEV) and/or the like. Also, the lithium battery may be used in any field that requires a large amount of energy storage. For example, the lithium battery may be used in an electric bicycle, a power tool, and/or the like.

Multiple units of the lithium battery may be stacked to form a battery module, and multiple units of the battery module may form a battery pack. Such a battery pack may be utilized in all types of devices that require high capacity and high output. For example, the battery pack may be used in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled by a battery management system. The battery management system may include a battery pack, and a battery control device connected to the battery pack.

A method of preparing a composite anode active material according to one or more embodiments may include: providing porous silicon secondary particles; preparing a silicon-containing composite structure by supplying a carbon source gas to the porous silicon secondary particles and performing heat-treatment on the porous silicon secondary particles; preparing a first composition including the silicon-containing composite structure, an amorphous carbon precursor containing a heterogeneous element of (*e.g.,* selected from) Group 15 and/or Group 17 of the Periodic Table, and an additive; and producing a composite anode active material by heat-treating the first composition at 300 °C or less. A composite anode active material prepared by the preparation method above may include: a silicon-containing composite structure; a first carbon-based coating layer including first amorphous carbon and disposed on the silicon-containing composite structure; and second amorphous carbon disposed within the silicon-containing composite structure, wherein the silicon-containing composite structure may include porous silicon secondary particles; and first carbon flakes disposed on the porous silicon secondary particles, wherein the porous silicon secondary particles may each include an agglomerate of a plurality of silicon composite primary particles, wherein the silicon composite primary particles may include silicon; a silicon suboxide ($SiO_x$, $0<x<2$) disposed on the silicon; and second carbon flakes disposed on the silicon suboxide, and wherein the second amorphous carbon may be disposed in pores of the porous silicon secondary particle and the second amorphous carbon may include a heterogeneous element belonging to at least one of (*e.g.,* at least one selected from) Group 15 and/or Group 17 of the Periodic Table.

First, the process of providing porous silicon secondary particles may be performed.

Pulverized silicon primary particles may be obtained by pulverizing a structure including silicon and a silicon suboxide ($SiO_x$, $0<x<2$) formed on the silicon. The silicon primary particles may have, for example, an acicular eutectic particle shape or a spherical particle shape. A composition may be obtained by mixing the pulverized silicon primary particles, a dispersing agent, and a solvent. Porous silicon secondary particles may be obtained from the composition obtained. Pores may be present inside the porous silicon secondary particles. The porous silicon secondary particles may have a porosity of, for example, about 0.1 % to about 50 %, about 1 % to about 40 %, or about 5 % to about 30%. Pores in the porous silicon secondary particles may have a size of about 10 nm to about 500 nm, about 20 nm to about 200 nm, or about 30 nm to about 300 nm.

The porous silicon secondary particles may be prepared from the composition described above by any of one or more suitable methods, for example, coprecipitation, spray drying, or a solid-phase method. For example, the porous silicon secondary particles may be prepared by spray drying. If (*e.g.,* when) the porous silicon secondary particles are prepared by spray drying, a particle diameter thereof may be controlled by appropriately choosing a spraying type, a pressurized gas supply rate, a composition supply rate, a drying temperature, and the like. The spray drying may be performed at an atmosphere temperature of about room temperature (25 °C) to about 500 °C, for example, about 50 °C to about 300 °C, about 50 °C to about 250 °C, or about 70 °C to about 200 °C. The spray drying, if (*e.g.,* when) performed within the above temperature ranges, may ensure that the produced silicon composite secondary particles have appropriate porosity, while preventing or reducing in advance issues such as particle agglomeration/blocking of a particle discharge outlet due to moisture condensation near the particle discharge outlet.

During the spray drying, the spraying pressure of the spray drying may be about 1 bar to about 5 bar, or about 0.3 MPa to about 0.6 MPa. During the spray drying, the size of the nozzle may be about 1 $\mu$m to about 10 $\mu$m, and may be 5 $\mu$m, for example. Prior to the spray drying, the surface area of the starting material may be increased as much as desirable, for example, by pulverization. To this aim, pulverized silicon primary particles may be used as the starting material. For example, if (*e.g.,* when) formed by spray drying, the obtained porous silicon secondary particles may be spherical.

The dispersing agent, for example, stearic acid, may partially remain on the surface of the porous silicon secondary particles. An alcohol may be used as a solvent. The alcohol may be, for example, ethanol, methanol, isopropyl alcohol, and/or the like. If (*e.g.,* when) a heat-treatment is performed using an alcohol-based solvent, the dispersing agent may be removed along with the solvent, thus minimizing or reducing the amount of the dispersing agent remaining in the porous silicon composite. As a result, the obtained silicon-containing composite may have a minimized or reduced amount of oxygen remaining in the pores of the porous silicon secondary particles. The dispersing agent may serve to substantially uniformly disperse the silicon primary particles. The dispersing agent may be, without being limited to, at least one of (*e.g.,* at least one selected from among) stearic acid, resorcinol, polyvinyl alcohol, carbon pitch, and/or a combination thereof. The amount of the dispersing agent may be about 1 part by weight to about 15 parts by weight, for example, about 5 parts by weight to about 10 parts by weight with respect to the total weight of the composition. If (*e.g.,* when) the amount of the dispersing agent is within these ranges, silicon and graphene may be substantially uniformly dispersed without agglomeration.

Subsequently, the process of preparing a silicon-containing composite structure by supplying a carbon source gas to the porous silicon secondary particles and performing heat-treatment on the porous silicon secondary particles may be carried out.

By supplying a carbon source gas to the porous silicon secondary particles and performing heat-treatment on the porous silicon secondary particles, carbon flakes may be disposed on the porous silicon secondary particles, thereby producing a silicon-containing porous composite. The carbon source gas may first fill the pores of the porous silicon secondary particles, and the carbon flakes may grow on the outside of the porous silicon secondary particles and on the exposed surface of the silicon composite primary particles (*e.g.,* the surface of the silicon composite primary particles that defines the pores). The carbon source gas may be at least one of (*e.g.,* at least one selected from among) a compound represented by Formula 1, a compound represented by Formula 2, and/or a first oxygen-containing compound represented by Formula 3.

**Formula 1**         $C_nH_{(2n+2-a)}[OH]_a$

In Formula 1, n may be an integer of 1 to 20, 2 to 18, or 4 to 16, and a may be 0 or 1,

**Formula 2**         $C_nH_{(2n)}$

In Formula 2, n may be an integer from 2 to 6,

**Formula 3**         $C_xH_yO_z$

In Formula 3, x may be an integer of 1 to 20, 2 to 18, or 4 to 16, y may be 0, or an integer of 1 to 20, or an integer of 2 to 18, and z may be 1 or 2.

For example, the carbon source gas may be at least one of (*e.g.,* at least one selected from among) methane, ethylene, propylene, methanol, ethanol, propanol, and/or acetylene. The heat-treatment may be performed at a temperature of about 600 °C to about 1,100 °C, for example, at a temperature of about 650 °C to about 1,000 °C, or for example, at a temperature of about 700 °C to about 1,000 °C. Carrying out the heat-treatment at a temperature within the above ranges may allow graphene to be formed with high density on the core or the shell, or on both the core and the shell. If (*e.g.,* when) the carbon flakes are carbon nanotube flakes, carbon fiber flakes, graphitic carbon flakes, or graphene oxide flakes, the carbon flakes may be prepared by a generally available and/or suitable method. The carbon flakes may include first carbon flakes and second carbon flakes. The first carbon flakes may be grown on the outer surface of the porous silicon secondary particles. The second carbon flakes may be grown on the exposed surface of the silicon composite primary particles.

The silicon-containing composite structure may include porous silicon secondary particles, and the porous silicon secondary particles may (e.g., may each) include an agglomerate of a plurality of silicon composite primary particles.

The silicon composite primary particle may include, for example: silicon; and a silicon suboxide disposed on the silicon ($SiO_x$, where $0<x<2$) and graphene disposed on the silicon suboxide (*e.g.,* the second carbon flakes). Silicon suboxide ($SiO_x$, $0<x<2$), which is a material more unstable and oxygen-deficient compared to silicon dioxide ($SiO_2$), has a tendency to react with other reactive materials, *i.e.,* a carbon source gas, to form more stable materials. Taking advantage of this tendency, a silicon suboxide ($SiO_x$, $0<x<2$) film may be utilized as a seed layer material to form graphene. The thickness of a silicon suboxide ($SiO_x$, $0<x<2$) film formed on top of silicon may critically affect the shape, structure, and/or the like, of the graphene. The thickness of the silicon suboxide ($SiO_x$) ($0<x<2$) film may be modified through, for example, the composition of a carbon source gas that is needed for graphene formation during a preparation process used to form graphene. The thickness of the silicon suboxide ($SiO_x$) ($0<x<2$) film may be 300 $\mu$m or less. The thickness of the silicon suboxide ($SiO_x$) ($0<x<2$) film may be, for example, 10 nm or less, about 0.1 nm to about 10 nm, about 0.1 nm to about 7.5 nm, about 0.1 nm to about 5 nm, or about 0.4 nm to about 5 nm. By using the silicon-containing composite structure containing the silicon composite primary particles having a silicon suboxide ($SiO_x$) ($0<x<2$) film having a thickness in the above ranges, capacity characteristics of a lithium battery may be further improved.

Next, the process of preparing a first composition including a silicon-containing composite structure, an amorphous carbon precursor containing a heterogeneous element of (*e.g.,* selected from) Group 15 and/or Group 17 of the Periodic Table, and an additive, may be performed.

The first composition may be prepared by dry-mixing. The dry-mixing may be performed by the type of mixer that performs mixing without any structure exerting physical force to materials being dry-mixed inside the mixer. Such a mixer may be, for example, a planetary centrifugal mixer. The planetary centrifugal mixer may be a mixer that simultaneously performs rotation and revolution motions with or without a vacuum condition. For example, the rotation rate and the revolution rate may be each independently 2,000 rotations per minute (rpm) or less, or 1,000 rpm or less. The structure exerting physical force to materials may refer to a structure, *e.g.,* a rotor and a ball, that applies a force such as an impact force to the materials. Use of the mixer described above may minimize or reduce damage and alteration to the materials being dry-mixed.

For example, the planetary centrifugal mixer may be a planetary mixer or a planetary dispenser mixer. For example, a planetary centrifugal mixer may be commercially available, for example, under the trade name Thinky® Mixer. (THINKY® is a registered trademark of Thinky Corporation, a Japanese company). Using a planetary centrifugal mixer as the mixer, by appropriately controlling the revolution rate and the rotation rate, an agitation process and a deaeration process may be performed alternatingly to ensure substantially uniform mixing of components. In the agitation process, the revolution rate may be 1,000 rpm or less, for example, 900 rpm or less, or for example, 750 rpm or less, and the rotation rate may be 1,000 rpm or less. Also, in the deaeration process, the revolution rate may be 2,000 rpm or less, for example, 1,750 rpm or less, or for example, 1,500 rpm or less, and the rotation rate may be 100 rpm or less, for example, about 10 rpm to about 100 rpm. If (*e.g.,* when) the revolution rate and the rotation rate are within the aforementioned ranges in the agitation process and the deaeration process, damage and alteration to each component may be minimized or reduced and substantially uniform mixing of the components may be achieved.

In the dry-mixing process, more effective infiltration of carbon into pores of the silicon composite may be achieved by introducing each of the components in multiple divided portions, *e.g.,* 3 or 4 portions, rather than introducing all of the components at once. In addition, using the type of mixer described above may allow formation of a dense structure with amorphous carbon filled inside a silicon composite while retaining the shape of the silicon composite.

An additive may be used to ensure substantially uniform mixing during the dry-mixing process, wherein examples of such additives may include N-methyl pyrrolidone, isopropyl alcohol (IPA), dimethylformamide, butanol, or a combination thereof. Addition of such additive in the dry-mixing process may facilitate dissolution of components, *e.g.,* dissolution of heterogeneous element-containing amorphous carbon precursors, and the subsequent infiltration of these components. These additives may also enhance binding strength between the components and be removed due to their high volatility. The amount of additive may be, for example, 25 parts by weight or less, about 10 parts by weight to about 25 parts by weight, or about 12 parts by weight to about 25 parts by weight, with respect to 100 parts by weight of the materials being dry-milled.

Unlike the dry-mixing process described above, a wet-mixing process may involve an amount of additives of more than 25 parts by weight, about 26 parts by weight to about 150 parts by weight, about 30 parts by weight to about 150 parts by weight, or about 50 parts by weight to about 125 parts by weight, with respect to 100 parts by weight of the materials being wet-milled. The amount of additives in the first composition may be 25 parts by weight or less, about 5 parts by weight to about 25 parts by weight, about 10 parts by weight to about 25 parts by weight, or about 12 parts by weight to about 25 parts by weight, with respect to 100 parts by weight of the total weight of a solids content (*e.g.,* amount) of the first composition. A solids content (*e.g.,* amount) of the second composition may include a silicon-containing composite structure and an amorphous carbon precursor containing a heterogeneous element of (e.g., selected from) Group 15 and/or Group 17 of the Periodic Table.

The dry-mixing may undergo a process of controlling the temperature to be at 25 °C or less or within a range of about 15 °C to about 25 °C. In one or more embodiments, the dry-mixing may be performed at a temperature of about 30 °C to about 80 °C, about 50 °C to about 80 °C, or about 60 °C to about 70 °C.

The amorphous carbon precursor containing a heterogeneous element (*e.g.,* selected from) Group 15 and/or Group 17 of the Periodic Table may be, for example, a fluorine-containing polymer, a nitrogen-containing polymer, a phosphorus (P)-containing polymer, or a mixture thereof. The fluorine-containing polymer may be, for example, polyvinylidene fluoride, polytetrafluoroethylene, or the like. The nitrogen-containing polymer may be a polyamide, a polyimide, or the like. The phosphorus (P)-containing polymer may be polyphosphonic acid or the like.

In the first composition, the amount of the amorphous carbon precursor containing a heterogeneous element of (*e.g.,* selected from) Group 15 and/or Group 17 of the Periodic Table may be about 1 part by weight to about 75 parts by weight, about 3 parts by weight to about 60 parts by weight, or 5 parts by weight to 30 parts by weight, with respect to 100 parts by weight of the first composition. If (*e.g.,* when) carried out under the above conditions, the amorphous carbon precursor may be more effectively infiltrated into the silicon-containing composite structure. If (*e.g.,* when) the amorphous carbon precursor is effectively infiltrated into the silicon-containing composite structure, the composite anode active material thus prepared may suppress or reduce side reactions caused by electrolyte after cycling and may also achieve excellent or suitable characteristics in regard to physical volume expansion rate.

Next, the first composition may be heat-treated at a temperature of 300 °C or less to thereby produce a composite anode active material.

By heat-treating the first composition, amorphous carbon containing a heterogeneous element of (*e.g.,* selected from) Group 15 and/or Group 17 of the Periodic Table may be formed from an amorphous carbon precursor containing a heterogeneous element of (*e.g.,* selected from) Group 15 and/or Group 17 of the Periodic Table. Consequently, the second amorphous carbon may be disposed within the silicon-containing composite structure, and the second amorphous carbon may include a heterogeneous element belonging to at least one of (*e.g.,* at least one selected from) Group 15 and/or Group 17 of the Periodic Table. The heat-treatment of the first composition may be performed at a temperature of 350 °C or less under an inert gas atmosphere. For example, the heat-treatment of the first composition may be performed at a temperature of about 100 °C to about 350 °C, about 100 °C to about 300 °C, or about 100 °C to about 250 °C. If the temperature of the heat-treatment is excessively high, the heterogeneous element may be vaporized during the heat-treatment and thus fail to remain in the amorphous carbon. The heat-treatment may be carried out under an inert atmosphere. The inert atmosphere may be an inert gas atmosphere. Examples of the inert gas may include nitrogen, argon, and/or the like.

The present disclosure will be described in greater detail through Examples and Comparative Examples below. However, it will be understood that the following examples are provided merely to illustrate the present disclosure, and should not be construed as limiting the scope of the present disclosure.

**Preparation of Composite Anode Active Material Comparative Example 1: Porous Silicon Secondary Particles**

By pulverizing acicular silicon, acicular eutectic silicon particles, which have a length of about 120 nm and a thickness of about 30 nm, and have a silicon suboxide ($SiO_x$, $0<x<2$) film having a thickness of about 0.1 nm formed on the surface thereof, were obtained.

A composition containing 30 parts by weight of the acicular eutectic silicon particles, 10 parts by weight of stearic acid, and 60 parts by weight of isopropyl alcohol, was prepared. By spray-drying the prepared composition and drying the spray-dried product, porous silicon secondary particles having an average particle diameter of about 5 $\mu$m were obtained.

The spray-drying was performed using a spray dryer (Micro Mist Spray Dryers, Fujisaki Electric Co., Ltd.). Under a nitrogen atmosphere, the spray nozzle size was about 5 $\mu$m, the pressure during spray drying was about 0.4 MPa, and the atmosphere temperature during powder drying was about 200 °C.

The composition prepared under the above spray-drying conditions was sprayed, thereby removing isopropyl alcohol therefrom, to produce porous silicon secondary particles.

The produced porous silicon secondary particles were used as a composite anode active material.

**Comparative Example 2: Silicon Composite Structure**

The porous silicon secondary particles prepared in Comparative Example 1 were loaded into a reactor. With $CH_4$ supplied into the reactor at about 350 sccm at 1 atm, the internal temperature of the reactor was raised to 1,000 °C at a temperature elevation rate of about 25 °C/min.

Subsequently, a heat-treatment was performed while maintaining the above temperature for 5 hours. Subsequently, the supply of $CH_4$, was cut and the internal temperature of the reactor was adjusted to room temperature (25 °C), and a silicon composite structure was obtained.

The obtained silicon composite structure was found to include porous silicon secondary particles and highly-crystalline first graphene flakes disposed on the porous silicon secondary particles. The porous silicon secondary particles were found to include an agglomerate of two or more silicon composite primary particles. The silicon composite primary particles were found to include silicon; a silicon suboxide ($SiO_x$, $0<x<2$) disposed on the silicon; and second graphene flakes disposed on the silicon suboxide.

The amount of the first graphene flakes and second graphene flakes in the silicon composite structure was about 27 parts by weight with respect to 100 parts by weight of the total weight of the silicon composite structure. The silicon composite structure was porous.

The prepared silicon composite structure was used as a composite anode active material.

**Comparative Example 3: Silicon Composite Structure + External F-Doped First Amorphous Carbon-Containing First Coating Layer**

Using a planetary mixer, 45 parts by weight of the silicon composite structure prepared in Comparative Example 2, 5 parts by weight of polyvinylidene fluoride (PVDF), and 50 parts by weight of N-methyl pyrrolidone were mixed to produce a composition. Dry-milling of the composition was performed for 10 minutes.

The dry-milling was performed at 12,000 rpm, and the milling temperature was controlled to about 50 °C. The milled product was subjected to a heat-treatment at about 200 °C for 3 hours under an argon gas atmosphere.

A composite anode active material, which has a first carbon-based coating layer containing F-doped first amorphous carbon on the silicon composite structure, was prepared.

**Comparative Example 4: Silicon Composite Structure + External First Amorphous Carbon Coating Layer + Infiltrated Second Amorphous Carbon**

Using a planetary mixer, 70 parts by weight of the silicon-containing composite structure prepared in Comparative Example 2, 20 parts by weight of coal-tar pitch, and 10 parts by weight of N-methyl pyrrolidone were added, and a mixing operation was performed.

By the mixing operation, the coal-tar pitch was infiltrated between voids of the porous silicon secondary particles (e.g., voids of a or one porous silicon secondary particle or each of the porous silicon secondary particles) included in the silicon composite structure. The mixing operation for infiltration of coal-tar pitch was performed 4 cycles in total, wherein each cycle involves agitation-deaeration-agitation in sequence and takes a total of 15 minutes, each step performed for 5 minutes. The revolution rate was 1,000 rpm and the rotation rate was 1,000 rpm in the agitation step, and the revolution rate was 2,000 rpm and the rotation rate was 64 rpm in the deaeration step, wherein 40 parts by weight of the coal-tar pitch mentioned above was divided into 4 portions and each portion was added to each cycle. The mixing temperature was controlled to about 70 °C. The mixed product was subjected to a heat-treatment at about 1,000 °C for 4 hours under a nitrogen gas atmosphere.

As a result, a composite anode active material, which has a first carbon-based coating film containing first amorphous carbon on the silicon composite structure and contains second amorphous carbon disposed inside the silicon composite structure, was prepared.

The second amorphous carbon was disposed in pores of the porous silicon secondary particles included in the silicon composite structure. The weight ratio of the first amorphous carbon to the second amorphous carbon was 1:2.

**Comparative Example 5: Silicon Composite Structure + External First Coating Layer containing First Amorphous Carbon**

Using a planetary mixer, 60 parts by weight of the silicon-containing composite structure prepared in Comparative Example 2, 20 parts by weight of coal-tar pitch, and 20 parts by weight of N-methyl pyrrolidone were mixed to produce a composition. Dry-milling of the composition was performed for 10 minutes.

The dry-milling was performed at 12,000 rpm, and the milling temperature was controlled to about 50 °C. The milled product was subjected to a heat-treatment at about 1,000 °C for 3 hours under an argon gas atmosphere.

A composite anode active material having a first carbon-based coating layer containing first amorphous carbon on the silicon composite structure was prepared.

**Example 1: Silicon Composite Structure + First Carbon-Based Coating Layer Containing External F-Doped First Amorphous Carbon + Infiltrated F-Doped Second Amorphous Carbon, Doped F Content (*e.g.*, Amount) of 0.5 wt%**

Polyvinylidene fluoride (PVDF) was added to N-methyl pyrrolidone and sonicated for 30 minutes to produce a 15 wt% PVDF solution.

In a Thinky® mixer, 63 parts by weight of the silicon-containing composite structure prepared in Comparative Example 2, 3 parts by weight of PVDF, and 34 parts by weight of N-methyl pyrrolidone were added and a mixing operation was performed.

By the mixing operation, PVDF infiltrated between voids of porous silicon secondary particles (e.g., voids of a or one porous silicon secondary particle or each of the porous silicon secondary particles) included in the silicon composite structure. The mixing operation for infiltration of PVDF was performed 4 cycles in total, wherein each cycle takes 15 minutes in total and involves agitation-deaeration-agitation in sequence, each step performed for 5 minutes. The revolution rate was 1,000 rpm and the rotation rate was 1,000 rpm in the agitation step, and the revolution rate was 2,000 rpm and the rotation rate was 64 rpm in the deaeration step, wherein a 10 wt% PVDF solution was divided into 3 portions and each portion was added to each cycle, such that the total amount of PVDF added equals the amount of 3 parts by weight mentioned above. The mixing temperature was controlled to about 70 °C. The mixed product was subjected to a heat-treatment at about 200 °C for 3 hours under a nitrogen gas atmosphere.

As a result, a composite anode active material, which has a first carbon-based coating film containing F-doped first amorphous carbon on the silicon composite structure and contains F-doped second amorphous carbon disposed inside the silicon composite structure, was prepared.

The F-doped second amorphous carbon was disposed in the pores of porous silicon secondary particles included in the silicon composite structure. The weight ratio of the F-doped first amorphous carbon to the F-doped second amorphous carbon was 1:2.

In the prepared composite anode active material, the weight ratio of carbon in the graphene flakes to carbon in the carbon-based coating film was 7:3. The graphene flakes here includes both the first graphene flakes and the second graphene flakes.

In the prepared composite anode active material, the weight ratio of carbon in the graphene flakes to the amorphous carbon was 7:9. The amorphous carbon here includes both the first amorphous carbon and the second amorphous carbon.

Based on transmission electron microscope (TEM) and energy dispersive X-ray spectroscopy (EDS) analyses of a cross-section of the composite anode active material, the content (*e.g.*, amount) of fluorine doped in the second amorphous carbon was 0.5 wt%.

The fluorine content (*e.g.*, amount) doped in the first amorphous carbon was substantially identical to the fluorine content (*e.g.*, amount) doped in the second amorphous carbon.

**Example 2: Silicon Composite Structure + First Carbon-Based Coating Layer Containing External F-Doped First Amorphous Carbon + Infiltrated F-Doped Second Amorphous Carbon, Doped F Content (*e.g.,* Amount) of 1 wt%**

A composite anode active material was prepared following substantially the same process as in Example 1, except that the PVDF content (*e.g.*, amount) was modified such that the fluorine content (*e.g.*, amount) doped into the second amorphous carbon was 1 wt%.

The fluorine content (*e.g.*, amount) doped in the first amorphous carbon was substantially identical to the fluorine content (*e.g.*, amount) doped in the second amorphous carbon.

**Example 3: Silicon Composite Structure + First Carbon-Based Coating Layer Containing External F-Doped First Amorphous Carbon + Infiltrated F-Doped Second Amorphous Carbon, Doped F Content (*e.g.*, Amount) of 1.8 Wt%**

A composite anode active material was prepared following substantially the same process as in Example 1, except that the PVDF content (*e.g.*, amount) was modified such that the fluorine content (*e.g.*, amount) doped into the second amorphous carbon was 1.8 wt%.

The fluorine content (*e.g.*, amount) doped in the first amorphous carbon was substantially identical to the fluorine content (*e.g.*, amount) doped in the second amorphous carbon.

**Example 4: Silicon Composite Structure + First Carbon-Based Coating Layer Containing External F-Doped First Amorphous Carbon + Infiltrated F-Doped Second Amorphous Carbon, Doped F Content (*e.g.*, Amount) of 3.2 Wt%**

A composite anode active material was prepared following substantially the same process as in Example 1, except that the PVDF content (*e.g.*, amount) was modified such that the fluorine content (*e.g.*, amount) doped into the second amorphous carbon was 3.2 wt%.

The fluorine content (*e.g.*, amount) doped in the first amorphous carbon was substantially identical to the fluorine content (*e.g.*, amount) doped in the second amorphous carbon.

**Example 5: Silicon Composite Structure + External F-Doped First Amorphous Carbon Coating Layer + Infiltrated F-Doped Second Amorphous Carbon, Doped F Content (*e.g.*, Amount) of 1 Wt% + Second Carbon-Based Coating Layer**

Polyvinylidene fluoride (PVDF) was added to N-methyl pyrrolidone and sonicated for 30 minutes to produce a 15 wt% PVDF solution.

45 parts by weight of the silicon-containing composite structure prepared in Comparative Example 2, 5 parts by weight of polyvinylidene fluoride (PVDF), and 50 parts by weight of N-methyl pyrrolidone were added to a Thinky® mixer, and a mixing operation was performed.

By the mixing operation, the PVDF was infiltrated between voids of porous silicon secondary particles included in the silicon composite structure. The mixing operation for infiltration of PVDF was performed 4 cycles in total, wherein each cycle takes a total of 15 minutes and involves agitation-deaeration-agitation in sequence, each step performed for 5 minutes. The stirring rate was 1,000 rpm in the agitation step and the revolution rate was 2,000 rpm in the deaeration step, wherein a 10 wt% PVDF solution was divided into 3 portions and each portion was added to each cycle, such that the total amount of PVDF added equals the amount of 5 parts by weight mentioned above. The mixing temperature was controlled to about 70 °C to produce a first mixed product.

Using a Thinky® mixer, 60 parts by weight of the mixed product thus produced and 3 parts by weight of coal tar pitch were subjected to dry-mixing. The dry-mixing was performed for 5 minutes at 2,000 rpm, and the mixing temperature was controlled to about 70 °C to produce a second mixed product.

The obtained second mixed product was introduced into a Nobilta mixer (Hosokawa Micoron, Japan) and was milled at 7,000 rpm for 5 minutes, while the milling temperature was controlled to about 50 °C.

The milled product was subjected to a heat-treatment at about 150 °C under a nitrogen gas atmosphere for 3 hours, and then after raising the temperature to 1,000 °C at a rate of about 4 °C/min, was subjected to a heat-treatment at this temperature for 3 hours.

A composite anode active material was prepared, in which a first carbon-based coating film containing F-doped first amorphous carbon was disposed on the silicon composite structure, F-doped second amorphous carbon was disposed inside the silicon composite structure, and a second carbon-based coating film containing third amorphous carbon undoped with F was disposed on the first carbon-based coating film.

**Comparative Example 6: Silicon Composite Structure + External F-Doped First Amorphous Carbon Coating Layer + Infiltrated F-Doped Second Amorphous Carbon, F Removal by High-Temperature Heat-Treatment**

A composite anode active material was prepared following substantially the same process as in Example 1, except that the heat-treatment temperature of the mixed product was changed from 200 °C to 800 °C.

Based on TEM and EDS analyses of a cross-section of the composite anode active material, no fluorine doped in the second amorphous carbon was detected. Also, no fluorine was detected in the first amorphous carbon.

**Preparation of Anode and Lithium Full Cell**

**Example 6**

**Preparation of Anode**

A slurry was prepared by mixing the composite anode active material prepared in Example 1, graphite, a CMC/SBR binder (1:1 weight ratio mixture), and deionized water. The mixing ratio of a mixture of the composite anode active material and graphite to a solids content (*e.g.*, amount) of the CMC/SBR binder was 97.5:2.5 in weight ratio. In the mixture of the composite anode active material and graphite prepared in Example 1, the weight ratio of the composite anode active material to graphite was 5:95.

On a copper foil current collector, the slurry was bar-coated to a thickness of 50 μm, dried at room temperature, and vacuum-dried again at 120 °C under vacuum, and then rolled to produce an anode.

**Preparation of Cathode**

A mixture containing $LiNi_{0.91}Co_{0.05}Al_{0.04}O_2$ (hereinafter, referred to as NCA91) composite cathode active material, a carbon conductive agent (Denka Black® (Denka Black® is a registered trademark of Denka, Co., Ltd., a Japanese corporation)), and polyvinylidene fluoride (PVDF) in a weight ratio of 96:2:2 was mixed with N-methyl pyrrolidone (NMP) in an agate mortar to produce a slurry.
On an aluminum current collector, the slurry was bar-coated to a thickness of 40 μm, dried at room temperature, and dried again under a vacuum condition at 120 °C, and then rolled to produce an anode.

**Preparation of Coin Cells**

A coin cell using the cathode and anode prepared above, and a polypropylene separator (Celgard® 3510 (Celgard® is a registered trademark of Celgard, LLC, a Delaware company)), and using as an electrolyte a solution containing 1.15M $LiPF_6$ and 1.5 wt% of vinylene carbonate (VC) dissolved in EC (ethylene carbonate) + EMC (ethyl methyl carbonate) + DMC (dimethyl carbonate) (2:4:4 volume ratio), was prepared.

**Examples 7 to 10**

Coin cells were prepared following substantially the same process as Example 6, except that the composite anode active materials prepared in Examples 2 to 5 were respectively used instead of the composite anode active material prepared in Example 1.

**Comparative Examples 7 to 12**

Coin cells were prepared following substantially the same process as Example 6, except that the composite anode active materials prepared in Comparative Examples 1 to 6 were respectively used instead of the composite anode active material prepared in Example 1.

**Preparation of Anode and Lithium Half Cell**

**Example 11**

**Preparation of Anode**

A slurry was prepared by mixing the composite anode active material prepared in Example 1, graphite, a CMC/SBR binder (1:1 weight ratio mixture), and deionized water. The mixing ratio of a mixture of the composite anode active material and graphite to a solids content (e.g., amount) of the CMC/SBR binder was 97.5:2.5 in weight ratio. In the mixture of the composite anode active material and graphite prepared in Example 1, the weight ratio of the composite anode active material to graphite was 5:95.
On a copper foil current collector, the slurry was bar-coated to a thickness of 50 μm, dried at room temperature, vacuum-dried again under a vacuum condition at 120 °C, and then rolled to produce an anode.

**Preparation of Coin Cells**

A coin cell was prepared using the prepared anode as a working electrode, a lithium metal electrode as a counter electrode, a polypropylene separator (Celgard® 3510) and an electrolyte, the electrolyte being a solution containing 1.15 M $LiPF_6$ and 1.5 wt% vinylene carbonate (VC) dissolved in EC (ethylene carbonate) + EMC (ethyl methyl carbonate) + DMC (dimethyl carbonate) (2:4:4 volume ratio).

**Comparative Example 13**

A coin cell was prepared following substantially the same process as Example 11, except that the composite anode active material prepared in Comparative Example 2 was used instead of the composite anode active material prepared in Example 1.

**Evaluation Example 1: SEM Analysis**

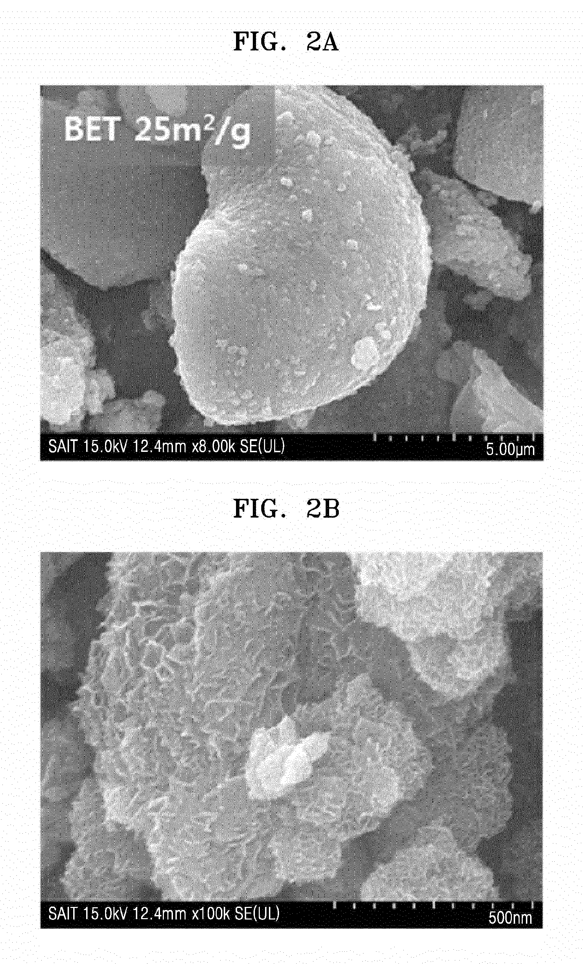

SEM images of the surface of the composite anode active materials prepared in Comparative Example 2, Example 1, and Example 5, and specific surface areas and average particle diameters thereof are shown in FIGs. 2A to 2F and Table 1.

Specific surface area was measured by nitrogen porosimetry. Particle diameter was measured using a laser scattering particle size distribution analyzer.

FIGs. 2A and 2B are scanning electron microscope images of a composite anode active material prepared in Comparative Example 2. As shown in FIG. 2A, the composite anode active material prepared in Comparative Example 2 was found to have a non-spherical particle shape.

As shown in FIG. 2B, the composite anode active material of Comparative Example 2, due to including a plurality of carbon flakes disposed on the surface of the composite anode active material, shows increased surface irregularities.

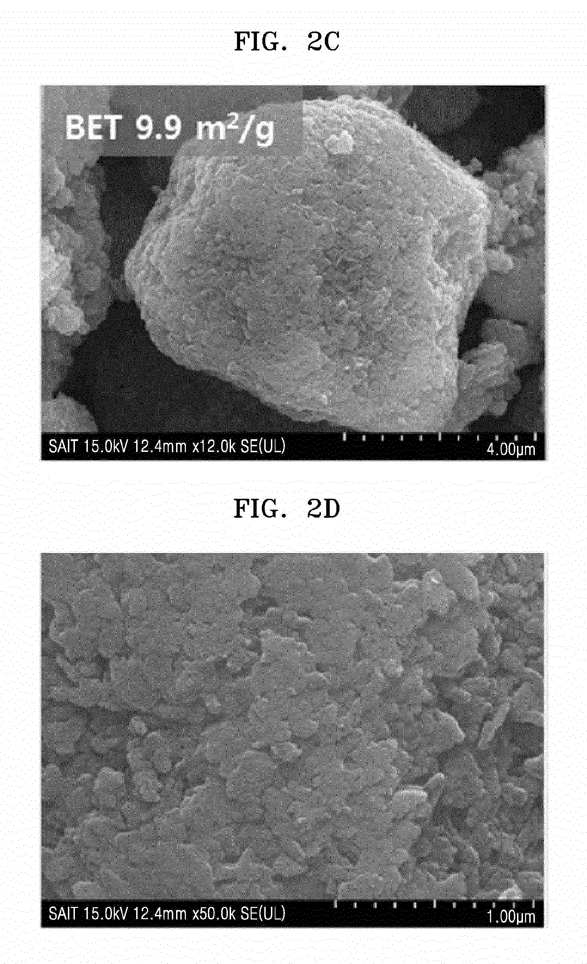

FIGs. 2C and 2D are scanning electron microscope images of a composite anode active material prepared in Example 1. As shown in FIG. 2C, the composite anode active material prepared in Example 1 was found to have a non-spherical particle shape.

As shown in FIG. 2D, the composite anode active material of Example 1, due to including a first carbon-based coating layer disposed on the surface of the composite anode active material, shows decreased surface irregularities.

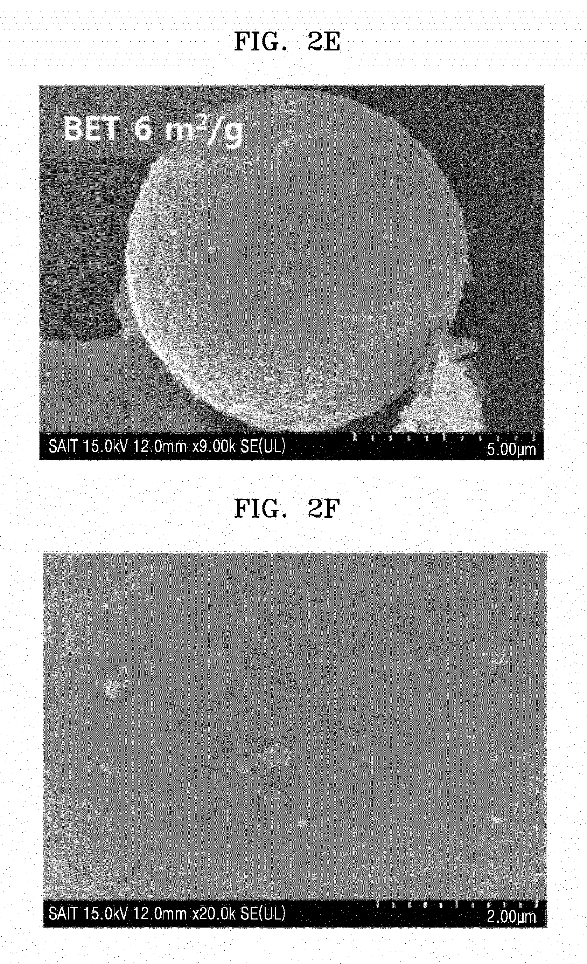

FIGs. 2E and 2F are scanning electron microscope images of a composite anode active material prepared in Example 5. As shown in FIG. 2E, the composite anode active material prepared in Example 5 was found to have a spherical particle shape.

As shown in FIG. 2F, the composite anode active material of Example 5 further reduced surface irregularities due to further including a second carbon-based coating layer disposed on the first carbon-based coating layer.

**Table 1**

|  | Particle Shape | Specific Surface Area [m²/g] | D10 [μm] | D50 [μm] | D90 [μm] |
|---|---|---|---|---|---|
| Comparative Example 2 | Non-spherical | 25 | 1.2 | 7.5 | 14.5 |
| Example 2 | Non-spherical | 9.9 | 1.2 | 7.7 | 14.7 |
| Example 5 | Spherical | 6 | 1.1 | 8.5 | 14.8 |

As shown in FIGs. 2A to 2F and Table 1, a gradual decrease in specific surface area was observed in the composite anode active materials prepared in Comparative Example 2, Example 2, and Example 5.

The composite anode active materials prepared in Comparative Example 2 and Example 2 had a non-spherical particle shape, but the composite anode active material prepared in Example 5 had a spherical particle shape.

A SEM image of a cross section of the composite anode active material prepared in Comparative Example 5 confirmed the presence of a plurality of pores on the surface of the cross section. Therefore, it was confirmed that the silicon-containing composite structure inside the composite anode active material prepared in Comparative Example 5 was porous. Meanwhile, in SEM images of cross sections of the composite anode active materials prepared in Comparative Example 4 and Examples 1 to 5, there was no observable plurality of pores on the surface of the cross sections. Therefore, it was confirmed that the silicon-containing composite structures inside the composite anode active materials prepared in Comparative Example 4 and Examples 1 to 5 were non-porous.

**Evaluation Example 2: HAADF-TEM and STEM-EDS Analyses**

HAADF-STEM (High-Angle Annular Dark Field Scanning Transmission Electron Microscope) and STEM-EDS (Energy Dispersive X-ray Spectroscopy) elemental mapping analyses were performed on a cross section of the composite anode active material prepared in Example 2, and the results are shown in FIGs. 3A to 3F.

As shown in FIG. 3A, the silicon-containing composite structure includes porous silicon secondary particles, and the porous silicon secondary particles have a structure including an agglomerate of a plurality of silicon composite primary particles.

FIG. 3B is a TEM-EDS mapping image of a silicon element in a cross-section of a composite anode active material prepared in Example 1. As shown in FIG. 3B, the silicon primary particles were found to have an acicular shape and/or a eutectic shape.

FIG. 3C is a TEM-EDS mapping image of a carbon element in a cross-section of a composite anode active material prepared in Example 1. As shown in FIG. 3C, the second amorphous carbon was found to be present in spaces between the primary silicon particles.

FIG. 3D is a TEM-EDS mapping image of a fluorine element in a cross-section of a composite anode active material prepared in Example 1. As shown in FIG. 3D, the doped fluorine was found to be present within the second amorphous carbon. In addition, it was found that the doped fluorine atoms were disposed adjacent to the silicon primary particles.

FIG. 3E is an image of an area selected for EDS analysis from an HAADF-STEM image in a cross-section of a composite anode active material prepared in Example 1. FIG. 3F is an image of an area selected for EDS analysis from a TEM-EDS mapping image of a fluorine element in a cross-section of a composite anode active material prepared in Example 1. As shown in FIGs. 3E and 3F, the amounts of elements present in region A where the second amorphous carbon is mainly disposed, and region B where primary silicon particles are mainly disposed, were measured, and the results thereof are shown in Table 2.

**Table 2**

|  | Fluorine Content (*e.g.*, Amount) [wt%] |
| --- | --- |
| Region A | 1.5 |
| Region B | 0.2 |

As shown in FIG. 3F and Table 2, the fluorine (F) content (*e.g.*, amount) doped into region A where the second amorphous carbon is mainly disposed, was 1.5 wt% with respect to the total quantity of elements in region A.

Meanwhile, the fluorine (F) content (*e.g.*, amount) doped in region B where the silicon primary particles are mainly disposed was negligible.

Accordingly, it was confirmed that fluorine (F) was doped into the second amorphous carbon filled inside the silicon-containing composite structure in the composite anode active material prepared in Example 2.

It was confirmed that fluorine (F) was also doped into the first carbon-based coating layer coated on the silicon-containing composite structure. That is, the first amorphous carbon was also doped with fluorine.

**Evaluation Example 3: Evaluation of Room-Temperature (25 °C) Cycle**

**Characteristics (I)**

The lithium batteries prepared in Examples 6 to 9 and Comparative Examples 7 and 8 were each charged at a constant current of 0.1 C ( Rate )at 25 °C until the voltage reached 4.5 V (vs. Li), and then the charging was cut-off at a current of 0.02 C while maintaining 4.5 V in a constant voltage mode. Subsequently, each battery was discharged at a constant current of 0.1 C until the battery voltage reached 2.75 V (vs. Li) during discharge (formation cycle).

The lithium batteries after the formation cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.5 C until the battery voltage reached 2.75 V (vs. Li) during discharge (1st cycle). The above cycle was repeated under substantially the same conditions up to the 165th cycle (repeated 165 times).

In all charge-discharge cycles, after each charge/discharge cycle, a rest period of 10 minutes was provided. A part of the room-temperature cycling test results is shown in Table 3. Capacity retention ratio was defined by Equation 1. Discharge capacity is discharge capacity at the 165th cycle.

**Equation 1**

**Capacity Retention Ratio [%] = [Discharge Capacity at 165th cycle / Discharge Capacity at 1st cycle] × 100**

**Table 3**

|  | Capacity Retention Ratio [%] | Discharge Capacity [mAh/g] |
| --- | --- | --- |
| Example 6: F 0.5 wt%-doped second amorphous carbon of Example 1 | 81 | 158.1 |

(continued)

|  | Capacity Retention Ratio [%] | Discharge Capacity [mAh/g] |
|---|---|---|
| Example 7: 1 wt% F-doped second amorphous carbon of Example 2 | 82.6 | 158.5 |
| Example 8: 1.8 wt% F-doped second amorphous carbon of Example 3 | 81.9 | 158.2 |
| Example 9: 3.2 wt% F-doped second amorphous carbon of Example 4 | 80.6 | 158.2 |
| Comparative Example 7: Porous silicon secondary particles of Comparative Example 1 | 3 | 149.5 |
| Comparative Example 8: Porous silicon-containing composite structure of Comparative Example 2 | 76.9 | 157.5 |

As shown in Table 3, the lithium batteries of Examples 6 to 9 showed improved discharge capacity and lifespan characteristics compared to the lithium batteries of Comparative Examples 7 and 8.

Without being bonded by any consideration below, it was considered that these improvements in discharge capacity and lifespan characteristics are attributed to the fact that disposition of fluorine-doped second amorphous carbon inside the silicon-containing composite structure, and disposition of fluorine-doped first amorphous carbon on the silicon-containing composite structure lead to formation of a modified solid electrolyte interface (SEI) on the surface and/or inside of the composite anode active material, and as a result, the internal resistance of the lithium battery was suppressed or reduced.

For example, inclusion of lithium-conductive inorganic compounds, e.g., LiF and $Li_2O$, derived from fluorine (F) on the inside or surface of the composite anode active material during cycling of the lithium battery may lead to formation of a stable SEI with improved mechanical strength and lithium ion conductivity. It was thus considered that effective suppression or reduction of side reactions caused by the electrolyte on the inside and/or surface of the composite anode active material contributed to the above improvements. Further, it was considered that these improvements are attributed to the fact that the flake carbon directly grown and disposed on silicon inside the composite anode active material effectively accommodated volume changes of the silicon.

**Evaluation Example 4: Evaluation of Room-Temperature (25 °C) Cycle**

**Characteristics (II)**

The lithium batteries prepared in Example 7 and Comparative Examples 8 and 9 were each charged at a constant current of 0.1 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.1 C until the battery voltage reached 2.75 V (vs. Li) during discharge (formation cycle).

The lithium batteries after the formation cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.2 C until the battery voltage reached 2.75 V (vs. Li) during discharge (1st cycle). The above cycle was repeated under substantially the same conditions up to the 165th cycle (repeated 165 times).

In all charge-discharge cycles, after each charge/discharge cycle, a rest period of 10 minutes was provided. A part of the room-temperature charge-discharge test results is shown in Table 4. Capacity retention ratio was defined by Equation 1. Discharge capacity is discharge capacity at the 165th cycle.

## Equation 1

## Capacity Retention Ratio [%] = [Discharge Capacity at 165th cycle / Discharge Capacity at 1st cycle] × 100

Table 4

| | Capacity Retention Ratio [%] | Discharge Capacity [mAh/g] |
|---|---|---|
| Example 7: F-doped second amorphous carbon of Example 2 | 82.6 | 158.5 |
| Comparative Example 8: Porous silicon-containing composite structure of Comparative Example 2 | 76.9 | 157.5 |
| Comparative Example 9: F-doped carbon dry-coated silicon-containing composite structure of Comparative Example 3 | 80.6 | 151.7 |

As shown in Table 4, the lithium battery of Example 7 shows improved discharge capacity and lifespan characteristics compared to the lithium batteries of Comparative Examples 8 and 9.

It was considered that these improvements in discharge capacity and lifespan characteristics are attributed to the fact that infiltration of F-doped second amorphous carbon into the silicon-containing composite structure leads to more effective protection of the silicon-containing composite structure during cycling of the lithium battery.

**Evaluation Example 5: Evaluation of Room-Temperature (25 °C) Cycle**

**Characteristics (III)**

The lithium batteries prepared in Example 7 and Comparative Example 10 were each charged at a constant current of 0.1 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.1 C until the battery voltage reached 2.75 V (vs. Li) during discharge (formation cycle).

The lithium batteries after the formation cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.2 C until the battery voltage reached 2.75 V (vs. Li) during discharge (1st cycle). The above cycle was repeated under substantially the same conditions up to the 165th cycle (repeated 165 times).

Throughout the charge-discharge cycles above, a rest period of 10 minutes was provided after each charge/discharge cycle. A part of the room-temperature charge-discharge test results is shown in Table 5. Capacity retention ratio was defined by Equation 1. Discharge capacity is discharge capacity at the 165th cycle.

## Equation 1

## Capacity Retention Ratio [%] = [Discharge Capacity at 165th cycle / Discharge Capacity at 1st cycle] × 100

Table 5

| | Capacity Retention Ratio [%] | Discharge Capacity [mAh/g] |
|---|---|---|
| Example 7: F-doped second amorphous carbon of Example 2 | 82.6 | 158.5 |
| Comparative Example 10: Second Amorphous Carbon Undoped with F of Comparative Example 4 | 77.6 | 157 |

As shown in Table 5, the lithium battery of Example 7 shows improved discharge capacity and lifespan characteristics compared to the lithium battery of Comparative Example 10.

It was considered that these improvements in discharge capacity and lifespan characteristics are attributed to the fact that fluorine doping of second amorphous carbon disposed inside the silicon-containing composite structure leads to more effective suppression or reduction of side reactions inside the silicon-containing composite structure during cycling of the lithium battery.

**Evaluation Example 6: Evaluation of Room-Temperature (25 °C) Cycle Characteristics (IV)**

The lithium batteries prepared in Example 10 and Comparative Examples 8 and 11 were each charged at a constant current of 0.1 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.1 C until the battery voltage reached 2.75 V (vs. Li) during discharge (formation cycle).

The lithium batteries after the formation cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.2 C until the battery voltage reached 2.75 V (vs. Li) during discharge (1st cycle). The above cycle was repeated under substantially the same conditions up to the 165th cycle (repeated 165 times).

In all charge-discharge cycles, after each charge/discharge cycle, a rest period of 10 minutes was provided. A part of the room-temperature charge-discharge test results is shown in Table 6. Capacity retention ratio was defined by Equation 1. Discharge capacity is discharge capacity at the 165th cycle.

## Equation 1

**Capacity Retention Ratio [%] = [Discharge Capacity at 165th cycle / Discharge Capacity at 1st cycle] × 100**

**Table 6**

|  | Capacity Retention Ratio [%] | Discharge Capacity [mAh/g] |
|---|---|---|
| Example 10: First coating layer/Second coating layer structure of Example 5 | 82.7 | 158.2 |
| Comparative Example 8: Porous silicon-containing composite structure of Comparative Example 2 | 76.9 | 157.5 |
| Comparative Example 11: Protective shell-coated porous silicon-containing composite structure of Comparative Example 5 | 74.1 | 152.2 |

As shown in Table 6, the lithium battery of Example 10 shows improved discharge capacity and lifespan characteristics compared to the lithium batteries of Comparative Examples 8 and 11.

It was considered that these improvements in discharge capacity and lifespan characteristics are attributed to the fact that fluorine doping of fluorine-doped second amorphous carbon inside the silicon-containing composite structure leads to more effective suppression or reduction of side reactions inside the silicon-containing composite structure during cycling of a lithium battery,

and that the additional inclusion of the second carbon-based coating layer in addition to the first carbon-based coating layer on the silicon-containing composite structure further improves structural stability of the composite anode active material.

**Evaluation Example 7: Evaluation of Interfacial Resistance**

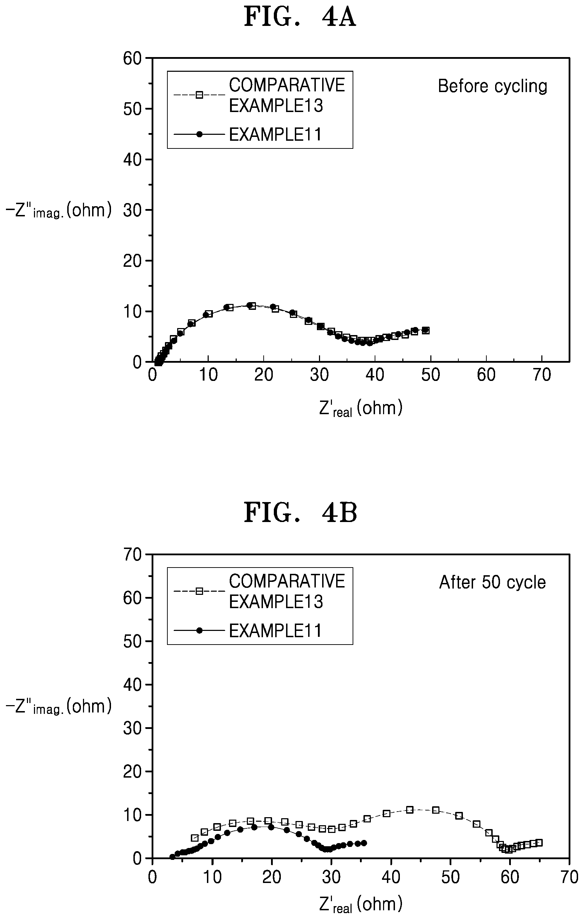

The lithium batteries prepared in Example 12 and Comparative Example 13 were measured for impedance of pellets by a two-probe method, using an impedance analyzer (Solartron® 1400A/1455A impedance analyzer (Solartron® is a registered trademark of Advanced Measurement Technology, Inc., a Delaware corporation)) before and after cycling. The frequency range was 0.1 Hz to 1 MHz, and the amplitude voltage was 10 mV. Measurements were made in an ambient atmosphere at 25 °C. Nyquist plots obtained from the impedance measurements are shown in FIGs. 4A and 4B.

FIG. 4A shows the results of impedance measurement of the lithium batteries of Example 12 and Comparative Example 13 before cycling.

FIG. 4B shows the results of impedance measurement of the lithium batteries of Example 12 and Comparative Example 13 after cycling.

The batteries were cycled under the following conditions.

The lithium batteries prepared in Example 12 and Comparative Example 13 were each charged at a constant current of 0.1 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.1 C until the battery voltage reached 2.75 V (vs. Li) during discharge (formation cycle).

The lithium batteries after the formation cycle were each charged at a constant current of 0.5 C at 25 °C until the voltage reached 4.5 (vs. Li), and then the charging was cut-off at a current of 0.02 C while maintaining 4.5 V in a constant voltage mode. Subsequently, each battery was discharged at a constant current of 0.5 C until the battery voltage reached 2.75 V (vs. Li) during discharge (1st cycle). The above cycle was repeated under substantially the same conditions up to the 50th cycle (repeated 50 times).

As shown in FIG. 4A, interfacial resistances of the lithium batteries of Example 12 and Comparative Example 13 were similar before cycling.

In contrast, as shown in FIG. 4B, after cycling, $R_{SEI}$, the resistance component due to charge transfer of the lithium battery of Comparative Example 13 shows a significant increase compared to the lithium battery of Example 12.

It was considered that this difference may be attributed to the fact that in the composite anode active material included in the lithium battery of Example 12, F-doped second amorphous carbon is disposed inside the silicon-containing composite structure, and because a solid electrolyte interface derived from the second amorphous carbon contains components such as LiF and/or $Li_2O$, ion conductivity, mechanical properties, and stability of the solid electrolyte interface increase, which results in a decrease in the internal resistance of the lithium battery.

**Evaluation Example 8: Evaluation of Room-Temperature High-Rate Discharge**

**Capability**

The lithium batteries prepared in Example 12 and Comparative Example 13 were each charged at a constant current of 0.1 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.2 C until the battery voltage reached 2.75 V (vs. Li) during discharge (formation cycle).

The lithium batteries after the formation cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.2 C until the battery voltage reached 2.75 V (vs. Li) during discharge (1st cycle).

The lithium batteries after the 1st cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 0.5 C until the battery voltage reached 2.8 V (vs. Li) during discharge (2nd cycle).

The lithium batteries after the 2nd cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 1.0 C until the battery voltage reached 2.8 V (vs. Li) during discharge (3rd cycle).

The lithium batteries after the 3rd cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 3.0 C until the battery voltage reached 2.8 V (vs. Li) during discharge (4th cycle).

The lithium batteries after the 4th cycle were each charged at a constant current of 0.2 C at 25 °C until the voltage reached 4.5 V (vs. Li), and then the charging was cut-off at a current of 0.02 C while maintaining 4.5 V in a constant voltage mode. Subsequently, each battery was discharged at a constant current of 4.0 C until the battery voltage reached 2.8 V (vs. Li) during discharge (5th cycle).

Throughout the charge-discharge cycles above, a rest period of 10 minutes was provided after each charge/discharge cycle. The results of room-temperature high-rate discharge capability tests are shown in Table 7. High-rate capability is defined by Equation 5.

## Equation 5

## High-Rate Capability [%] = [Discharge Capacity at $n^{th}$ cycle / Discharge Capacity at $1^{st}$ cycle] × 100

**Table 7**

| | 0.2C [%] | 0.5C [%] | 1.0C [%] | 3.0C [%] | 4.0C [%] |
|---|---|---|---|---|---|
| Example 12: F-doped second amorphous carbon of Example 2 | 100 | 98.6 | 97.1 | 95.3 | 92.9 |
| Comparative Example 13: Silicon-containing composite structure of Comparative Example 2 | 100 | 98.7 | 97.2 | 95.2 | 91.9 |

As shown in Table 7, the coated lithium battery of Example 12 shows improved high-rate capability compared to the lithium battery of Comparative Example 13.

The improvement in high-rate capability of the lithium battery of Example 11 is considered to be attributable to the fact that the lithium battery of Example 12 has a decreased internal resistance by including the composite anode active material containing the F-doped second amorphous carbon prepared in Example 1.

According to aspects of embodiments of the present disclosure, as the composite anode active material includes a heterogeneous element doped with the second amorphous carbon, the lithium battery may have increased discharge capacity and improved cycle characteristics.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

**Claims**

1. A composite anode active material (100) comprising:

   a silicon-containing composite structure (30);
   a first carbon-based coating layer (150) on the silicon-containing composite structure (30) and comprising first amorphous carbon (140a); and
   a second amorphous carbon (140b) within the silicon-containing composite structure (30),
   wherein the silicon-containing composite structure (30) comprises:

   porous silicon secondary particles (20); and
   first carbon flakes (120a) on the porous silicon secondary particles (20),

   the porous silicon secondary particles (20) each comprising an agglomerate of a plurality of silicon composite primary particles (10),
   wherein the silicon composite primary particles (10) comprise:

   silicon (110),
   a silicon suboxide ($SiO_x$, 0<x<2) (130) on the silicon (110), and
   second carbon flakes (120b) on the silicon suboxide (130), and

   wherein the second amorphous carbon (140b) is in pores of the porous silicon secondary particles (20), and the second amorphous carbon (140b) comprises a heterogeneous element belonging to at least one selected from Group 15 and Group 17 of the Periodic Table.

2. The composite anode active material (100) of claim 1,
   wherein the heterogeneous element is at least one selected from fluorine (F), nitrogen (N), and phosphorus (P).

3. The composite anode active material (100) of claim 1 or 2,
   wherein on an energy dispersive X-ray spectroscopy (EDS) spectrum of the silicon-containing composite structure (30), a content of the heterogeneous element with respect to a total amount of elements in the silicon-containing composite structure (30) is about 0.1 wt% to about 10 wt%.

4. The composite anode active material (100) of claims 1 to 3,

   wherein the second amorphous carbon (140b) is on the second carbon flakes (120b),
   the second amorphous carbon (140b) is spaced apart from the silicon by the second carbon flakes (120b), and the heterogeneous element in the second amorphous carbon (140b) is adjacent to the silicon; and / or
   wherein the first amorphous carbon (140a) comprises a heterogeneous element belonging to at least one selected from Group 15 and Group 17 of the Periodic Table.

5. The composite anode active material (100) of claims 1 to 4,

   wherein on an energy dispersive X-ray spectroscopy (EDS) spectrum of the first carbon-based coating layer (150), a content of the heterogeneous element with respect to a total amount of elements in the silicon-containing composite structure (30) coated with the first carbon-based coating layer (150) is about 0.1 wt% to about 10 wt%; and/or
wherein the first amorphous carbon (140a) is on the first carbon flakes, and
the first amorphous carbon (140a) is spaced apart from the silicon by the first carbon flakes.

6. The composite anode active material (100) of claims 1 to 5,
wherein the composite anode active material has a porosity of 30% or less, or is non-porous.

7. The composite anode active material (100) of claims 1 to 6,
wherein the first carbon-based coating layer (150) is non-porous and has a thickness of about 1 nm to about 5,000 nm.

8. The composite anode active material (100) of claims 1 to 7,

wherein the first carbon flakes (120a) and the second carbon flakes (120b) each independently comprise graphene, graphite, carbon fibers, graphitic carbon, graphene oxide, or a mixture thereof, and
the first amorphous carbon (140a) and the second amorphous carbon (140b) each independently comprise a polymer carbide, pitch carbon, soft carbon, hard carbon, mesophase pitch carbide, calcined cokes, carbon fibers, or a mixture thereof; and/or
wherein a mixing ratio of a total weight of the first carbon flakes (120a) and the second carbon flakes (120b) to a total weight of the first amorphous carbon (140a) and the second amorphous carbon (140b) is about 30:1 to about 1:3.

9. The composite anode active material (100) of claims 1 to 8,

wherein the composite anode active material (100) has a non-spherical particle form, and the composite anode active material (100) has a specific surface area of about 1 m$^2$/g to about 20 m$^2$/g,
the silicon has a form comprising one or more spheres, needles, rods, particles, nanowires, nanotubes, nanorods, wafers, nanoribbons, or a mixture thereof, and
the silicon has an average size of about 10 nm to about 1,000 nm.

10. The composite anode active material (100) of claims 1 to 9, further comprising a second carbon-based coating layer (160) on the first carbon-based coating layer (150),

wherein the second carbon-based coating layer (160) comprises a third amorphous carbon (140c), and
the third amorphous carbon (140c) is free of a heterogeneous element belonging to at least one selected from Group 15 and Group 17 of the Periodic Table; and/or
wherein the third amorphous carbon (140c) comprises pitch carbon, soft carbon, hard carbon, mesophase pitch carbide, calcined cokes, carbon fibers, or a mixture thereof.

11. The composite anode active material (100) of claims 1 to 10,

wherein the composite anode active material (100) has a spherical particle form, and the composite anode active material (100) has a specific surface area of about 1 m$^2$/g to about 10 m$^2$/g; and/or.
wherein the composite anode active material (100) has an average particle diameter (D50) of about 1 $\mu$m to about 10 $\mu$m , a particle diameter (D10) of about 0.1 $\mu$m to about 7 $\mu$m, and a particle diameter (D90) of about 10 $\mu$m to about 30 $\mu$m.

12. The composite anode active material (100) of claims 1 to 11, further comprising a lithium compound within the silicon-containing composite structure (30),
wherein the lithium compound comprises at least one selected from LiF and Li$_2$O.

13. An anode (2) comprising the composite anode active material (100) according to any one of claims 1 to 12.

14. A lithium battery (1) comprising:

a cathode (3);
the anode (2) of claim 13; and
an electrolyte between the cathode (3) and the anode (2);
wherein optional the electrolyte comprises a liquid electrolyte, a solid electrolyte, a gel electrolyte, or a combination thereof, the solid electrolyte comprising an oxide-based solid electrolyte, a sulfide-based solid electrolyte, a polymer solid electrolyte, or a combination thereof, and the gel electrolyte comprising a polymer gel electrolyte; and/or wherein the cathode (3) comprises a cathode current collector, and the anode comprises an anode current collector; and/or

wherein optional at least one of the cathode current collector or the anode current collector comprises a base film and a metal film on one side or opposite sides of the base film, the base film comprising a polymer, the polymer comprising polyethylene terephthalate (PET), polyethylene (PE), polypropylene (PP), polybutylene terephthalate (PBT), polyimide (PI), or a combination thereof, and the metal layer comprising indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15.   A method of preparing a composite anode active material (100), the method comprising:

providing porous silicon secondary particles (20);
preparing a silicon-containing composite structure (30) by supplying a carbon source gas to the porous silicon secondary particles (20) and performing heat-treatment on the porous silicon secondary particles (20);
preparing a first composition, the first composition comprising the silicon-containing composite structure (30), an amorphous carbon precursor comprising a heterogeneous element belonging to Group 15 or Group 17 in the Periodic Table, and an additive; and
preparing a composite anode active material (100) by heat-treating the first composition at a temperature of 350 °C or less,
wherein the composite anode active material (100) comprises:

the silicon-containing composite structure (30);
a first carbon-based coating layer (150) on the silicon-containing composite structure (30) and comprising first amorphous carbon (140a); and
a second amorphous carbon (140b) within the silicon-containing composite structure (30),

wherein the silicon-containing composite structure (30) comprises:

porous silicon secondary particles (20); and
first carbon flakes (120a) on the porous silicon secondary particles (20),

and
the porous silicon secondary particles (20) each comprising an agglomerate of a plurality of silicon composite primary particles (10),
wherein the silicon composite primary particles (10) comprise

silicon (110),
a silicon suboxide ($SiO_x$, $0<x<2$) (130) on the silicon (110), and
second carbon flakes (120b) disposed on the silicon suboxide,

wherein the second amorphous carbon (140b) is in pores of the porous silicon secondary particles (20), and the second amorphous carbon (140b) comprises a heterogeneous element belonging to at least one selected from Group 15 and Group 17 of the Periodic Table.

# FIG. 1A

FIG. 1B

# FIG. 1C

# FIG. 1D

## FIG. 2A

## FIG. 2B

## FIG. 2C

BET 9.9 m²/g

SAIT 15.0kV 12.4mm x12.0k SE(UL)    4.00µm

## FIG. 2D

SAIT 15.0kV 12.4mm x50.0k SE(UL)    1.00µm

## FIG. 2E

## FIG. 2F

# FIG. 3A

# FIG. 3B

## FIG. 3C

C

100nm

## FIG. 3D

F

100nm

# FIG. 3E

HAADF

100nm

# FIG. 3F

F

100nm

## FIG. 4A

## FIG. 4B

# FIG. 5

# FIG. 6

# FIG. 7

**EUROPEAN SEARCH REPORT**

Application Number

EP 23 19 2835

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 509 136 A1 (SAMSUNG ELECTRONICS CO LTD [KR]; SAMSUNG SDI CO LTD [KR]) 10 July 2019 (2019-07-10) | 1-3,5-9, 11-15 | INV. H01M4/133 H01M4/134 |
| Y | * claims 1,4-7 * <br> * figure 1b * <br> * paragraphs [0048], [0067], [0071] – [0074] * <br> * example 1 * | 4,10 | H01M4/1393 H01M4/1395 H01M4/36 H01M4/38 H01M4/583 H01M4/02 |
| Y | US 2020/411844 A1 (OH DOORI [KR] ET AL) 31 December 2020 (2020-12-31) * paragraphs [0062], [0064] – [0068], [0102], [0103] * <br> * figures 5,6 * <br> * claim 7 * | 4 | |
| Y | KR 2021 0000983 A (SAMSUNG SDI CO LTD [KR]) 6 January 2021 (2021-01-06) * paragraph [0087] * | 10 | |
| X | EP 3 518 328 A1 (SAMSUNG ELECTRONICS CO LTD [KR]; SAMSUNG SDI CO LTD [KR]) 31 July 2019 (2019-07-31) * the whole document * | 1-15 | **TECHNICAL FIELDS SEARCHED (IPC)** <br> H01M |

The present search report has been drawn up for all claims

| Place of search | Date of completion of the search | Examiner |
|---|---|---|
| Munich | 8 December 2023 | Galbiati, Ivano |

## ANNEX TO THE EUROPEAN SEARCH REPORT
## ON EUROPEAN PATENT APPLICATION NO.

EP 23 19 2835

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2023

| Patent document cited in search report | | Publication date | Patent family member(s) | | Publication date |
|---|---|---|---|---|---|
| EP 3509136 | A1 | 10-07-2019 | CN | 109994717 A | 09-07-2019 |
| | | | EP | 3509136 A1 | 10-07-2019 |
| | | | US | 2019207221 A1 | 04-07-2019 |
| US 2020411844 | A1 | 31-12-2020 | KR | 20210000983 A | 06-01-2021 |
| | | | US | 2020411844 A1 | 31-12-2020 |
| KR 20210000983 | A | 06-01-2021 | KR | 20210000983 A | 06-01-2021 |
| | | | US | 2020411844 A1 | 31-12-2020 |
| EP 3518328 | A1 | 31-07-2019 | CN | 110085856 A | 02-08-2019 |
| | | | EP | 3518328 A1 | 31-07-2019 |
| | | | US | 2019233294 A1 | 01-08-2019 |

EPO FORM P0459

For more details about this annex : see Official Journal of the European Patent Office, No. 12/82